# EUROPEAN PATENT APPLICATION

(11) **EP 4 836 558 A1**
(43) Date of publication of application: **04.11.2026**
(21) Application number: 25751477.8
(22) Date of filing: 05.02.2025
(51) Int. Cl.: H04W 72/0446

(54) **COMMUNICATION METHOD AND COMMUNICATION APPARATUS**

(30) Priority: 08.02.2024 CN 202410178281
(71) Applicant: Huawei Technologies Co., Ltd., Shenzhen, Guangdong 518129 (CN)
(72) Inventor: LI, Chao, Shenzhen, Guangdong 518129 (CN); ZHANG, Jiayin, Shenzhen, Guangdong 518129 (CN)
(74) Representative: Epping - Hermann - Fischer
(86) International application number: PCT/CN2025/075726
(87) International publication number: WO 2025/167877

(57) **Abstract**

Provided are a communication method and a communication apparatus. The method includes: A first communication device multiplexes first control information and first data to obtain second data; performs time-domain spreading and/or frequency-domain spreading on the second data by using a first sequence to obtain third data that occupies a first resource; and transmits the third data on the first resource via a first shared channel. This implementation can avoid despreading errors and improve transmission performance and resource utilization.

## Description

This application claims priority to Chinese Patent Application No. 202410178281.3, filed with the China National Intellectual Property Administration on February 8, 2024 and entitled "COMMUNICATION METHOD AND COMMUNICATION APPARATUS", which is incorporated herein by reference in its entirety.

### TECHNICAL FIELD

This application relates to the field of communication technologies, and specifically, to a communication method and a communication apparatus.

### BACKGROUND

In communication systems, for example, in an application scenario where base stations are deployed on satellites and terminals are located on the ground, limited transmit power of the terminals may result in poor quality of communication links between the terminals and the base stations. Therefore, a repetition-based uplink coverage enhancement technology is introduced to compensate for the insufficient uplink transmit power of the terminals. However, due to multiple transmission repetitions, the systems incur low resource utilization and significant reduction of multiplexing capacity.

### SUMMARY

This application provides a communication method and a communication apparatus, so that transmission performance and resource utilization can be improved in a scenario of time-domain spreading and/or frequency-domain spreading on a first shared channel.

A first aspect provides a communication method. The method may be applied to a first communication device, for example, a terminal or a communication module in a terminal, or a circuit or chip responsible for a communication function in a terminal (such as a modem (modem) chip, also referred to as a baseband (baseband) chip, or a system on chip (system on chip, SoC) chip including a modem core, or a system in package (system in package, SIP) chip); in another example, a network device, or a chip or circuit in a network device, or a central unit (central unit, CU) or a distributed unit (distributed unit, DU) in a network device, or a function module that can call and execute a program in a network device.

In the method, the first communication device multiplexes first control information and first data to obtain second data; performs time-domain spreading and/or frequency-domain spreading on the second data by using a first sequence to obtain third data that occupies a first resource; and transmits the third data on the first resource via a first shared channel.

According to the foregoing method, multiplexing the first control information and the first data to obtain the second data may be understood as that the first control information and the first data are used as a whole, and the second data may be obtained through spreading by using a sequence. A first communication device is used as an example. For example, when transmitting a signal (for example, referred to as first data), the first communication device may spread a to-be-transmitted signal (for example, referred to as second data) by using a sequence (for example, referred to as a first sequence), and transmit a spread signal (for example, referred to as third data) to a second communication device. In this way, from a perspective of a system, different transmitting devices may perform spreading-based multiplexing at a same resource position by using sequences of a same length, so that resource utilization can be improved. In addition, multiplexing before time-domain spreading and/or frequency-domain spreading can avoid despreading errors at receive ends and improve transmission performance.

In an implementation, multiplexing the first control information and the first data to obtain the second data includes: arranging the first control information and the first data in a predefined manner on a time-domain resource carrying the first data, where the first resource includes the time-domain resource carrying the first data.

For example, arranging the first control information and the first data in the predefined manner may be a manner of frequency-domain multiplexing before time-domain multiplexing, in which the first control information is multiplexed from an initial time-domain unit in the time-domain resource of the first data.

In an implementation, performing time-domain spreading and/or frequency-domain spreading on the second data by using the first sequence, to obtain the third data that occupies the first resource includes: multiplying the second data by *N*₁ elements in the first sequence sequentially to obtain the third data, where the third data occupies Mx*N*₁ sub-resources, the first resource includes the Mx*N*₁ sub-resources, the second data is mapped onto a second resource, the second resource includes M sub-resources, the second resource is included in the first resource, M is a positive integer, and *N*₁ is a positive integer.

Based on the foregoing solution, the second data is multiplied by the *N*₁ elements in the first sequence sequentially to obtain the third data, so that a receiver can despread a signal including spread parts and perform combination during despreading, thereby avoiding despreading errors and improving system performance.

In an implementation, multiplexing the first control information and the first data to obtain the second data includes: multiplexing the first control information and the first data when a first control channel and the first shared channel overlap on the first resource, to obtain the second data, where the first control channel is used for carrying the first control information.

In other words, that the first control channel and the first shared channel overlap may be considered as a trigger condition for the first communication device to multiplex the first control information and the first data to obtain the second data. Optionally, the first control channel and the first shared channel may overlap on the second resource in the first resource, or the first control channel and the first shared channel may overlap on another resource in the first resource. This is not limited in this application.

In an implementation, multiplexing the first control information and the first data to obtain the second data includes: multiplexing the first control information and the first data when the second data is on the second resource and a value of the M sub-resources included in the second resource is greater than a first threshold, to obtain the second data, where the first control channel is used for carrying the first control information.

In other words, if a total quantity of spread symbols is excessively small, that is, if M is less than or equal to the first threshold, a quantity of effective symbols that can be used for data transmission is small. In this case, if the first control information and the first data are still multiplexed, an increase in data transmission errors is caused. This leads to a higher decoding error rate at the receive end, consequently degrading system transmission performance.

Optionally, the first threshold is predefined, preconfigured, or configured via signaling.

Optionally, the first threshold is related to a type of the first control information.

In an implementation, a modulation scheme for the first control information is the same as a modulation scheme for the first data.

In an implementation, the first resource is a data symbol in a slot, and the data symbol includes no demodulation reference signal.

In an implementation, the first control information includes but is not limited to any one of the following: uplink control information, downlink control information, or sidelink control information; and the first shared channel includes but is not limited to any one of the following: a physical uplink shared channel, a physical downlink shared channel, or a physical sidelink shared channel.

In an implementation, a DFT-s-OFDM waveform is used for the second data and/or the third data. In an implementation, before multiplexing the first control information and the first data to obtain the second data, the method further includes: determining to transmit the first shared channel on a first time-domain resource, where the first time-domain resource is included in the first resource; obtaining first information, where the first information indicates to transmit the first control channel on a second time-domain resource, the second time-domain resource is included in the first time-domain resource, and the first control channel is used for carrying the first control information; and determining, based on a time-domain position of the second time-domain resource, whether to multiplex the first control information on the first shared channel on the first time-domain resource.

Based on the foregoing solution, the first communication device determines, based on the time-domain position of the second time-domain resource, whether to multiplex the first control information on the first shared channel on the first time-domain resource. This can avoid despreading errors caused by multiplexing the first control information on the first shared channel that is inappropriate, and therefore can avoid reduction of transmission performance.

In an implementation, multiplexing the first control information and the first data to obtain the second data includes: multiplexing the first control information and the first data when a first condition is satisfied, to obtain the second data, where the first condition includes one or more of the following: an interval between the second time-domain resource and a third time-domain resource is greater than or equal to a first threshold, where the third time-domain resource is used for receiving the first information, or the third time-domain resource is a time-domain resource for triggering the first communication device to transmit the first control information; and a time-domain resource in which the second time-domain resource and the first time-domain resource overlap is a time-domain resource that is the first one in the first time-domain resource.

In an implementation, before multiplexing the first control information and the first data to obtain the second data, the method further includes: determining to transmit the first shared channel on a first time-domain resource, where the first time-domain resource is included in the first resource; obtaining first information, where the first information indicates to transmit the first control channel on a second time-domain resource, the second time-domain resource is included in the first time-domain resource, and the first control channel is used for carrying the first control information; and determining, based on a quantity of first time-domain resources and/or a quantity of second time-domain resources, whether to multiplex the first control information on the first shared channel on the first time-domain resource.

Based on the foregoing solution, the first communication device determines, based on the quantity of the first time-domain resources and/or the quantity of the second time-domain resources, whether to multiplex the first control information on the first shared channel on the first time-domain resource. This can avoid despreading errors caused by multiplexing the first control information on the first shared channel that is inappropriate, and therefore can avoid reduction of transmission performance.

In an implementation, multiplexing the first control information and the first data to obtain the second data includes: multiplexing the first control information and the first data when a second condition is satisfied, to obtain the second data, where the second condition includes: the quantity of the second time-domain resources is less than or equal to the quantity of the first time-domain resources.

A second aspect provides a communication method. The method may be applied to a second communication device, for example, a terminal or a communication module in a terminal, or a circuit or chip responsible for a communication function in a terminal (such as a modem (modem) chip, also referred to as a baseband (baseband) chip, or a system on chip (system on chip, SoC) chip including a modem core, or a system in package (system in package, SIP) chip); in another example, a network device, or a chip or circuit in a network device, or a central unit (central unit, CU) or a distributed unit (distributed unit, DU) in a network device, or a function module that can call and execute a program in a network device.

In the method, the second communication device receives third data on a first resource via a first shared channel; performs time-domain despreading and/or frequency-domain despreading on the third data by using a first sequence, to obtain second data; and demultiplexes the second data to obtain first control information and first data.

It should be understood that, despreading is a process of parsing and demodulating, by using a spreading sequence, spread data or information received by a receiver side.

It should be understood that, demultiplexing is a process of parsing, according to a process of arranging control information and data, the control information transmitted together with the data. In an implementation, performing time-domain despreading and/or frequency-domain despreading on the third data by using the first sequence, to obtain the second data includes: multiplying the third data by conjugates of *N*₁ elements in the first sequence sequentially, to obtain *N*₁ pieces of the second data, where each piece of the second data is on a second resource, the second resource includes M sub-resources, the second resource is included in the first resource, the third data includes Mx*N*₁ symbols, and both M and *N*₁ are positive integers.

In an implementation, receiving the third data via the first shared channel includes: receiving the third data via the first shared channel when a first control channel and the first shared channel overlap on the first resource, where the first control channel is used for carrying the first control information.

In an implementation, a modulation scheme for the first control information is the same as a modulation scheme for the first data.

In an implementation, the first resource is a data symbol in a slot, and the data symbol includes no demodulation reference signal.

In an implementation, the first control information includes but is not limited to any one of the following: uplink control information, downlink control information, or sidelink control information; and the first shared channel includes but is not limited to any one of the following: a physical uplink shared channel, a physical downlink shared channel, or a physical sidelink shared channel.

In an implementation, a DFT-s-OFDM waveform is used for the second data and/or the third data. For beneficial effects of the second aspect and some implementations, correspondingly refer to descriptions of the first aspect and some implementations thereof. Details are not described herein again.

A third aspect provides a communication method. The method may be applied to a first communication device. In the method, the first communication device determines to transmit a first shared channel on a first time-domain resource, where the first shared channel is used for carrying fourth data, the fourth data is obtained by performing *N*₂-fold time-domain spreading on fifth data, and *N*₂ is a positive integer; obtains first information, where the first information indicates to transmit a first control channel on a second time-domain resource, the second time-domain resource is included in the first time-domain resource, and the first control channel is used for carrying first control information; and determines, based on a time-domain position of the second time-domain resource, whether to multiplex the first control information on the first shared channel on the first time-domain resource.

According to the foregoing method, the first communication device determines, based on the time-domain position of the second time-domain resource, whether to multiplex the first control information on the first shared channel on the first time-domain resource. This can avoid despreading errors caused by multiplexing the first control information on the first shared channel that is inappropriate, and therefore can avoid reduction of transmission performance.

For example, the first time-domain resource or the second time-domain resource occupies one slot, or the first time-domain resource occupies some symbols in one slot, or the first time-domain resource occupies multiple slots.

In an implementation, the method further includes: transmitting the first shared channel on the first time-domain resource.

In an implementation, determining, based on the time-domain position of the second time-domain resource, whether to multiplex the first control information on the first shared channel on the first time-domain resource includes: determining, when an interval between the second time-domain resource and the third time-domain resource is greater than or equal to a first threshold, to multiplex the first control information on the first shared channel on the first time-domain resource; and/or determining, when the interval between the second time-domain resource and the third time-domain resource is less than the first threshold, not to multiplex the first control information on the first shared channel on the first time-domain resource, where the third time-domain resource is a time-domain resource for receiving the first information, or the third time-domain resource is a time-domain resource for triggering the first communication device to transmit the first control information.

Based on the foregoing implementation, the first communication device determines, based on the time interval between the third time-domain resource on which the first information is received and the second time-domain resource on which the first control channel is transmitted, whether to multiplex the first control information on the first shared channel on the first time-domain resource. For example, after the first communication device receives the first information on the third time-domain resource and before the first communication device transmits the first control channel on the second time-domain resource, if the time interval between the third time-domain resource and the second time-domain resource is long enough, the first communication device may multiplex the first control information on the first shared channel on the first time-domain resource. Conversely, if the time interval between the third time-domain resource and the second time-domain resource is not long enough, which means that the first communication device cannot process the first control channel in time, the first communication device may not multiplex the first control information on the first shared channel on the first time-domain resource, and may transmit only the first data on the first shared channel on the first time-domain resource, to ensure uninterrupted data transmission. Optionally, the first communication device drops the first control channel.

In an implementation, the first threshold is related to a processing capability of the first communication device.

In an implementation, determining, based on the time-domain position of the second time-domain resource, whether to multiplex the first control information on the first shared channel on the first time-domain resource includes: determining, when a time-domain resource in which the second time-domain resource and the first time-domain resource overlap is a time-domain resource that is the first one in the first time-domain resource, to multiplex the first control information on the first shared channel on the first time-domain resource; or determining, when a time-domain resource in which the second time-domain resource and the first time-domain resource overlap is a time-domain resource that is not the first one in the first time-domain resource, not to multiplex the first control information on the first shared channel on the first time-domain resource.

Based on the foregoing implementation, based on the position of the second time-domain resource, on which the first control channel is transmitted, in the first time-domain resource, the first communication device determines whether to multiplex the first control information on the first shared channel on the first time-domain resource. For example, if the second time-domain resource is a time-domain resource that is the first one in the third time-domain resource, the first communication device may multiplex the first control information on the first shared channel on the first time-domain resource. Conversely, if the second time-domain resource is not a time-domain resource that is the first one in the third time-domain resource, which means that the first data is currently being transmitted on a time-domain resource that is the first one in the first time-domain resource, and the first communication device cannot multiplex the first control information in time, the first communication device transmits only the first data on the first shared channel on the first time-domain resource, to ensure uninterrupted data transmission. Optionally, the first communication device drops the first control channel.

In an implementation, determining, based on the time-domain position of the second time-domain resource, whether to multiplex the first control information on the first shared channel on the first time-domain resource includes: determining, when a time-domain resource in which the second time-domain resource and the first time-domain resource overlap is a time-domain resource that is not the first one in the first time-domain resource, to multiplex the first control information on the first shared channel starting from the time-domain resource that is the first one in the first time-domain resource.

In an implementation, the method further includes: multiplexing the first control information on all first shared channels on the first time-domain resource.

In other words, when determining to multiplex the first data and the first control information, the first communication device multiplexes the first data and the first control information on the first shared channel on an initial time-domain unit in the first time-domain resource. In this way, after receiving a signal, a receive end can correctly perform despreading without decoding errors, ensuring data transmission performance to the maximum extent.

In an implementation, the time-domain spreading includes one or more of the following: a time-domain unit is a slot or a symbol.

In an implementation, the fourth data is obtained by performing *N*₃-fold frequency-domain spreading on the fifth data, and *N*₃ is a positive integer.

In an implementation, the frequency-domain spreading includes one or more of the following: resource element RE spreading or N-fold frequency-domain comb multiplexing, where N is a comb size of a frequency-domain resource occupied by the fifth data, and N is a positive integer. In an implementation, that the fourth data is obtained by performing the *N*₂-fold time-domain spreading on the fifth data includes: mapping the fifth data onto the third time-domain resource, where the third time-domain resource includes K time-domain sub-resources, the third time-domain resource is included in the first time-domain resource, and K is a positive integer; and multiplying the fifth data by *N*₂ elements in a second sequence sequentially to obtain the fourth data, where the fourth data occupies Kx*N*₂ sub-resources, and the first time-domain resource includes the Kx*N*₂ sub-resources.

In an implementation, a modulation scheme for the first control information is the same as a modulation scheme for the first data.

In an implementation, the first resource is a data symbol in a slot, and the data symbol includes no demodulation reference signal.

In an implementation, the first control information includes but is not limited to any one of the following: uplink control information, downlink control information, or sidelink control information; and the first shared channel includes but is not limited to any one of the following: a physical uplink shared channel, a physical downlink shared channel, or a physical sidelink shared channel.

In an implementation, a DFT-s-OFDM waveform is used for the fourth data.

For beneficial effects of the third aspect and some implementations, correspondingly refer to descriptions of the first aspect and some implementations thereof. Details are not described herein again.

A fourth aspect provides a communication method. The method may be applied to a second communication device. In the method, the second communication device receives a first shared channel on a first time-domain resource, where the first shared channel is used for carrying fourth data, the fourth data is obtained by performing *N*₂-fold time-domain spreading on fifth data, and *N*₂ is a positive integer; and determines, based on a time-domain position of a second time-domain resource, to perform demultiplexing on the first shared channel to obtain first control information, where the second time-domain resource is included in the first time-domain resource.

In an implementation, the method further includes: transmitting first information, where the first information indicates a first communication device to transmit a first control channel on the second time-domain resource, and the first control channel is used for carrying the first control information. In an implementation, receiving the first shared channel on the first time-domain resource includes: receiving the first shared channel on the first time-domain resource when an interval between the second time-domain resource and a third time-domain resource is greater than or equal to a first threshold, where the third time-domain resource is a time-domain resource for the first communication device to receive the first information, and the first information indicates to transmit the first control channel on the second time-domain resource, or the third time-domain resource is a time-domain resource for triggering the first communication device to transmit the first control information.

In an implementation, the first threshold is related to a processing capability of the first communication device.

In an implementation, receiving the first shared channel on the first time-domain resource includes: receiving the first shared channel on the first time-domain resource when a time-domain resource in which the second time-domain resource and the first time-domain resource overlap is a time-domain resource that is the first one in the first time-domain resource.

In an implementation, the time-domain spreading includes one or more of the following: a time-domain unit is a slot or a symbol.

In an implementation, the fourth data is obtained by performing *N*₃-fold frequency-domain spreading on the fifth data, and *N*₃ is a positive integer.

In an implementation, the frequency-domain spreading includes one or more of the following: resource element RE spreading or N-fold frequency-domain comb multiplexing, where N is a comb size of a frequency-domain resource occupied by the fifth data, and N is a positive integer. In an implementation, a modulation scheme for the first control information is the same as a modulation scheme for first data.

In an implementation, the first resource is a data symbol in a slot, and the data symbol includes no demodulation reference signal.

In an implementation, the first control information includes but is not limited to any one of the following: uplink control information, downlink control information, or sidelink control information; and the first shared channel includes but is not limited to any one of the following: a physical uplink shared channel, a physical downlink shared channel, or a physical sidelink shared channel.

In an implementation, a DFT-s-OFDM waveform is used for the fourth data.

For beneficial effects of the fourth aspect and some implementations, correspondingly refer to descriptions of the third aspect and some implementations thereof. Details are not described herein again.

A fifth aspect provides a communication method. The method may be applied to a first communication device. In the method, the first communication device determines to transmit a first shared channel on a first time-domain resource, where the first shared channel is used for carrying sixth data, the sixth data is obtained by performing *N*₄-fold time-domain spreading on seventh data, and *N*₄ is a positive integer; obtains first information, where the first information indicates to transmit a first control channel on a second time-domain resource, the second time-domain resource is included in the first time-domain resource, and the first control channel is used for carrying first control information; and determines, based on a quantity of first time-domain resources and/or a quantity of second time-domain resources, whether to multiplex the first control information on the first shared channel on the first time-domain resource.

According to the foregoing method, based on the foregoing solution, the first communication device determines, based on the quantity of the first time-domain resources and/or the quantity of the second time-domain resources, whether to multiplex the first control information on the first shared channel on the first time-domain resource. This can avoid despreading errors caused by multiplexing the first control information on the first shared channel that is inappropriate, and therefore can avoid reduction of transmission performance.

For example, the first time-domain resource or the second time-domain resource occupies one slot, or the first time-domain resource occupies some symbols in one slot, or the first time-domain resource occupies multiple slots.

In an implementation, the method further includes: transmitting the first shared channel on the first time-domain resource.

In an implementation, the quantity of the second time-domain resources is P, the quantity of the first time-domain resources is Q, and both P and Q are positive integers; and determining, based on the quantity of the first time-domain resources and/or the quantity of the second time-domain resources, whether to multiplex the first control information on the first shared channel on the first time-domain resource includes: determining, when Q is less than or equal to P, not to multiplex the first control information on the first shared channel on the Q first time-domain resources; or determining, when Q is less than or equal to P, not to transmit the first shared channel on the Q first time-domain resources.

In other words, if the quantity of the second time-domain resources is greater than or equal to the quantity of the first time-domain resources, or if a quantity of time-domain resources occupied by the first control channel is greater than a quantity of time-domain resources occupied by a first resource, the first communication device may not multiplex the first control information on the first shared channel on the first time-domain resource, or may drop or not transmit the first shared channel.

In an implementation, the quantity of the second time-domain resources is P, the quantity of the first time-domain resources is Q, and both P and Q are positive integers; and determining, based on the quantity of the first time-domain resources and/or the quantity of the second time-domain resources, whether to multiplex the first control information on the first shared channel on the first time-domain resource includes: multiplexing the first control information on the first shared channel on a fifth time-domain resource when P is less than Q, where the fifth time-domain resource is a time-domain resource that is the first one in an overlapping part between the first time-domain resource and the second time-domain resource; or the fifth time-domain resource is a time-domain resource that is the first one in the first time-domain resource; or the fifth time-domain resource is a time-domain resource that is the first one in the second time-domain resource. In other words, if the quantity of the second time-domain resources is less than or equal to the quantity of the first time-domain resources, or if a quantity of time-domain resources occupied by the first control channel is less than a quantity of time-domain resources occupied by a first resource, the first communication device may multiplex the first control information on the first shared channel on the first time-domain resource.

In an implementation, the quantity of the second time-domain resources is P, the quantity of the first time-domain resources is Q, and both P and Q are positive integers; and determining, based on the quantity of the first time-domain resources and/or the quantity of the second time-domain resources, whether to multiplex the first control information on the first shared channel on the first time-domain resource includes: determining, when P is less than Q, to multiplex second control information on the first shared channel on the Q first time-domain resources, where a second control channel is used for carrying the second control information, and the second control channel is a control channel that is the first one in the first control channel; and/or determining, when P is less than Q, not to transmit a third control channel, where a control channel other than the second control channel in the first control channel is the third control channel, and the second control channel is a control channel that is the first one in the first control channel.

In other words, if the quantity of the second time-domain resources is less than or equal to the quantity of the first time-domain resources, or if a quantity of time-domain resources occupied by the first control channel is less than a quantity of time-domain resources occupied by a first resource, the first communication device may multiplex control information that is the first one in multiple pieces of control information on the first shared channel on the first time-domain resource, and may drop or not multiplex the other control information.

In an implementation, the quantity of the second time-domain resources is P, the quantity of the first time-domain resources is Q, and both P and Q are positive integers; and determining, based on the quantity of the first time-domain resources and/or the quantity of the second time-domain resources, whether to multiplex the first control information on the first shared channel on the first time-domain resource includes: determining, when P is less than Q, not to multiplex the first control information on the first shared channel on the Q first time-domain resources.

In other words, if the quantity of the second time-domain resources is less than or equal to the quantity of the first time-domain resources, or if a quantity of time-domain resources occupied by the first control channel is less than a quantity of time-domain resources occupied by a first resource, the first communication device may not transmit or may drop a control information other than control information that is the first one on the first shared channel on the first time-domain resource.

In an implementation, that the sixth data is obtained by performing the *N*₄-fold time-domain spreading on the seventh data includes: mapping the seventh data onto a fourth time-domain resource, where the fourth time-domain resource includes L time-domain sub-resources, the fourth time-domain resource is included in the first time-domain resource, and L is a positive integer; and multiplying the seventh data by *N*₄ elements in a third sequence sequentially to obtain the sixth data, where the sixth data occupies Lx*N*₄ sub-resources, and the first time-domain resource includes the Lx*N*₄ sub-resources.

In an implementation, a modulation scheme for the first control information is the same as a modulation scheme for first data.

In an implementation, the first resource is a data symbol in a slot, and the data symbol includes no demodulation reference signal.

In an implementation, the first control information includes but is not limited to any one of the following: uplink control information, downlink control information, or sidelink control information; and the first shared channel includes but is not limited to any one of the following: a physical uplink shared channel, a physical downlink shared channel, or a physical sidelink shared channel.

In an implementation, a DFT-s-OFDM waveform is used for the sixth data.

In an implementation, the time-domain spreading includes one or more of the following: a time-domain unit is a slot or a symbol.

In an implementation, the sixth data is obtained by performing *N*₅-fold frequency-domain spreading on the seventh data, and *N*₅ is a positive integer.

In an implementation, the frequency-domain spreading includes one or more of the following: resource element RE spreading or S-fold frequency-domain comb multiplexing, where S is a comb size of a frequency-domain resource occupied by the seventh data, and S is a positive integer. For beneficial effects of the fifth aspect and some implementations, correspondingly refer to descriptions of the first aspect and some implementations thereof. Details are not described herein again.

A sixth aspect provides a communication method. The method may be applied to a second communication device. In the method, the second communication device receives a first shared channel on a first time-domain resource, where the first shared channel is used for carrying sixth data, the sixth data is obtained by performing *N*₄-fold time-domain spreading on seventh data, and *N*₄ is a positive integer; and determines, based on a quantity of first time-domain resources and/or a quantity of second time-domain resources, to perform demultiplexing on the first shared channel to obtain first control information, where the second time-domain resource is included in the first time-domain resource.

In an implementation, the method further includes: transmitting first information, where the first information indicates a first communication device to transmit a first control channel on the second time-domain resource, and the first control channel is used for carrying the first control information. In an implementation, the quantity of the second time-domain resources is P, the quantity of the first time-domain resources is Q, and both P and Q are positive integers; and receiving the first shared channel on the first time-domain resource includes: when P is less than Q, multiplexing the first control information on the first shared channel on a fifth time-domain resource, and receiving the first shared channel on the first time-domain resource, where the fifth time-domain resource is a time-domain resource that is the first one in an overlapping part between the first time-domain resource and the second time-domain resource; or the fifth time-domain resource is a time-domain resource that is the first one in the first time-domain resource; or the fifth time-domain resource is a time-domain resource that is the first one in the second time-domain resource.

In an implementation, receiving the first shared channel on the first time-domain resource includes: receiving the first shared channel on the first time-domain resource when a time-domain resource in which the second time-domain resource and the first time-domain resource overlap is a time-domain resource that is the first one in the first time-domain resource.

In an implementation, the time-domain spreading includes one or more of the following: a time-domain unit is a slot or a symbol.

In an implementation, the sixth data is obtained by performing *N*₅-fold frequency-domain spreading on the seventh data, and *N*₅ is a positive integer.

In an implementation, the frequency-domain spreading includes one or more of the following: resource element RE spreading or S-fold frequency-domain comb multiplexing, where S is a comb size of a frequency-domain resource occupied by the seventh data, and S is a positive integer.

In an implementation, a modulation scheme for the first control information is the same as a modulation scheme for first data.

In an implementation, the first resource is a data symbol in a slot, and the data symbol includes no demodulation reference signal.

In an implementation, the first control information includes but is not limited to any one of the following: uplink control information, downlink control information, or sidelink control information; and the first shared channel includes but is not limited to any one of the following: a physical uplink shared channel, a physical downlink shared channel, or a physical sidelink shared channel.

In an implementation, a DFT-s-OFDM waveform is used for the sixth data.

For beneficial effects of the sixth aspect and some implementations, correspondingly refer to descriptions of the fifth aspect and some implementations thereof. Details are not described herein again.

A seventh aspect provides a communication method. The method may be applied to a first communication device and a second communication device.

The method includes: The first communication device multiplexes first control information and first data to obtain second data; the first communication device performs time-domain spreading and/or frequency-domain spreading on the second data by using a first sequence, to obtain third data that occupies a first resource; the first communication device transmits the third data to the second communication device on the first resource via a first shared channel, and the second communication device receives the third data from the first communication device on the first resource via the first shared channel; the second communication device performs time-domain despreading and/or frequency-domain despreading on the third data by using the first sequence, to obtain the second data; and the second communication device demultiplexes the second data to obtain the first control information and the first data.

In an implementation, that the first communication device performs time-domain spreading and/or frequency-domain spreading on the second data by using the first sequence, to obtain the third data that occupies the first resource includes: The first communication device multiplies the second data by *N*₁ elements in the first sequence sequentially to obtain the third data, where the second data is on a second resource, the second resource includes M sub-resources, the second resource is included in the first resource, M is a positive integer, the third data occupies Mx*N*₁ sub-resources, the first resource includes the Mx*N*₁ sub-resources, and *N*₁ is a positive integer.

In an implementation, that the first communication device multiplexes the first control information and the first data to obtain the second data includes: The first communication device multiplexes the first control information and the first data when a first control channel and the first shared channel overlap on the first resource, to obtain the second data, where the first control channel is used for carrying the first control information; and/or multiplexes the first control information and the first data when the second data is on the second resource and a value of the M sub-resources included in the second resource is greater than a first threshold, to obtain the second data, where the first control channel is used for carrying the first control information.

In an implementation, that the second communication device performs time-domain despreading and/or frequency-domain despreading on the third data by using the first sequence, to obtain the second data includes: The second communication device multiplies the third data by conjugates of the *N*₁ elements in the first sequence sequentially, to obtain *N*₁ pieces of the second data, where each piece of the second data is on a second resource, the second resource includes M sub-resources, the second resource is included in the first resource, the third data includes Mx*N*₁ symbols, and both M and *N*₁ are positive integers.

In an implementation, the first communication device multiplexes the first control information and the first data to obtain the second data.:
In an implementation, the first resource is a data symbol in a slot, and the data symbol includes no demodulation reference signal.

In an implementation, a modulation scheme for the first control information is the same as a modulation scheme for the first data.

In an implementation, the first control information includes but is not limited to any one of the following: uplink control information, downlink control information, or sidelink control information; and the first shared channel includes but is not limited to any one of the following: a physical uplink shared channel, a physical downlink shared channel, or a physical sidelink shared channel.

In an implementation, a DFT-s-OFDM waveform is used for the second data and/or the third data. In an implementation, before the first communication device multiplexes the first control information and the first data to obtain the second data, the method further includes: The first communication device determines to transmit the first shared channel on a first time-domain resource, where the first time-domain resource is included in the first resource; the first communication device obtains first information, where the first information indicates to transmit the first control channel on a second time-domain resource, the second time-domain resource is included in the first time-domain resource, and the first control channel is used for carrying the first control information; and the first communication device determines, based on a time-domain position of the second time-domain resource, whether to multiplex the first control information on the first shared channel on the first time-domain resource.

In an implementation, that the first communication device multiplexes the first control information and the first data to obtain the second data includes: multiplexing the first control information and the first data when a first condition is satisfied, to obtain the second data, where the first condition includes one or more of the following: an interval between the second time-domain resource and a third time-domain resource is greater than or equal to a first threshold, where the third time-domain resource is used for receiving the first information; and a time-domain resource in which the second time-domain resource and the first time-domain resource overlap is a time-domain resource that is the first one in the first time-domain resource.

In an implementation, before the first communication device multiplexes the first control information and the first data to obtain the second data, the method further includes: determining to transmit the first shared channel on a first time-domain resource, where the first time-domain resource is included in the first resource; obtaining first information, where the first information indicates to transmit the first control channel on a second time-domain resource, the second time-domain resource is included in the first time-domain resource, and the first control channel is used for carrying the first control information; and determining, based on a quantity of first time-domain resources and/or a quantity of second time-domain resources, whether to multiplex the first control information on the first shared channel on the first time-domain resource.

In an implementation, that the first communication device multiplexes the first control information and the first data to obtain the second data includes: multiplexing the first control information and the first data when a second condition is satisfied, to obtain the second data, where the second condition includes: the quantity of the second time-domain resources is less than or equal to the quantity of the first time-domain resources.

For beneficial effects of the seventh aspect and some implementations, correspondingly refer to descriptions of the first aspect or second aspect and some implementations thereof. Details are not described herein again.

An eighth aspect provides a communication method. The method may be applied to a first communication device and a second communication device.

In the method, the first communication device determines to transmit a first shared channel on a first time-domain resource, where the first shared channel is used for carrying fourth data, the fourth data is obtained by performing *N*₂-fold time-domain spreading on fifth data, and *N*₂ is a positive integer; the first communication device obtains first information, where the first information indicates to transmit a first control channel on a second time-domain resource, the second time-domain resource is included in the first time-domain resource, and the first control channel is used for carrying first control information; the first communication device determines, based on a time-domain position of the second time-domain resource, whether to multiplex the first control information on the first shared channel on the first time-domain resource, and transmits the first shared channel on the first time-domain resource; and the second communication device receives the first shared channel on the first time-domain resource, and determines, based on the time-domain position of the second time-domain resource, to perform demultiplexing on the first shared channel to obtain the first control information.

In an implementation, the method further includes: The first communication device transmits the first shared channel on the first time-domain resource, and the second communication device receives the first shared channel on the first time-domain resource; the second communication device demultiplexes the first shared channel to obtain first control information and fourth data, where the fourth data is obtained by performing *N*₂-fold time-domain spreading on fifth data, and *N*₂ is a positive integer; and the second communication device performs *N*₂-fold time-domain despreading on the fourth data to obtain the fifth data.

In an implementation, that the first communication device determines, based on the time-domain position of the second time-domain resource, whether to multiplex the first control information on the first shared channel on the first time-domain resource includes: The first communication device determines, when an interval between the second time-domain resource and a third time-domain resource is greater than or equal to a first threshold, to multiplex the first control information on the first shared channel on the first time-domain resource; and/or the first communication device determines, when the interval between the second time-domain resource and the third time-domain resource is less than the first threshold, not to multiplex the first control information on the first shared channel on the first time-domain resource, where the third time-domain resource is a time-domain resource for receiving the first information, or the third time-domain resource is a time-domain resource for triggering transmission of the first control information.

In an implementation, the first threshold is related to a processing capability of the first communication device.

In an implementation, that the first communication device determines, based on the time-domain position of the second time-domain resource, whether to multiplex the first control information on the first shared channel on the first time-domain resource includes: The first communication device determines, when a time-domain resource in which the second time-domain resource and the first time-domain resource overlap is a time-domain resource that is the first one in the first time-domain resource, to multiplex the first control information on the first shared channel on the first time-domain resource; or the first communication device determines, when a time-domain resource in which the second time-domain resource and the first time-domain resource overlap is a time-domain resource that is not the first one in the first time-domain resource, not to multiplex the first control information on the first shared channel on the first time-domain resource.

In an implementation, that the first communication device determines, based on the time-domain position of the second time-domain resource, whether to multiplex the first control information on the first shared channel on the first time-domain resource includes: The first communication device determines, when a time-domain resource in which the second time-domain resource and the first time-domain resource overlap is a time-domain resource that is not the first one in the first time-domain resource, to multiplex the first control information on the first shared channel starting from the time-domain resource that is the first one in the first time-domain resource.

Optionally, the method further includes: The first communication device multiplexes the first control information on all first shared channels on the first time-domain resource.

In an implementation, the time-domain spreading includes one or more of the following: a time-domain unit is a slot or a symbol.

In an implementation, the fourth data is obtained by performing *N*₃-fold frequency-domain spreading on the fifth data, and *N*₃ is a positive integer.

In an implementation, the frequency-domain spreading includes one or more of the following: resource element RE spreading or N-fold frequency-domain comb multiplexing, where N is a comb size of a frequency-domain resource occupied by the fifth data, and N is a positive integer. In an implementation, that the fourth data is obtained by performing the *N*₂-fold time-domain spreading on the fifth data includes: The first communication device maps the fifth data onto the third time-domain resource, where the third time-domain resource includes K time-domain sub-resources, the third time-domain resource is included in the first time-domain resource, and K is a positive integer; and multiplies the fifth data by *N*₂ elements in a second sequence sequentially to obtain the fourth data, where the fourth data occupies Kx*N*₂ sub-resources, and the first time-domain resource includes the Kx*N*₂ sub-resources.

In an implementation, a modulation scheme for the first control information is the same as a modulation scheme for first data.

In an implementation, the first resource is a data symbol in a slot, and the data symbol includes no demodulation reference signal.

In an implementation, the first control information includes but is not limited to any one of the following: uplink control information, downlink control information, or sidelink control information; and the first shared channel includes but is not limited to any one of the following: a physical uplink shared channel, a physical downlink shared channel, or a physical sidelink shared channel.

In an implementation, a DFT-s-OFDM waveform is used for the fourth data.

For beneficial effects of the eighth aspect and some implementations, correspondingly refer to descriptions of the third aspect or fourth aspect and some implementations thereof. Details are not described herein again.

A ninth aspect provides a communication method. The method may be applied to a first communication device and a second communication device.

In the method, the first communication device determines to transmit a first shared channel on a first time-domain resource, where the first shared channel is used for carrying sixth data, the sixth data is obtained by performing *N*₄-fold time-domain spreading on seventh data, and *N*₄ is a positive integer; the first communication device obtains first information, where the first information indicates to transmit a first control channel on a second time-domain resource, the second time-domain resource is included in the first time-domain resource, and the first control channel is used for carrying first control information; the first communication device determines, based on a quantity of first time-domain resources and/or a quantity of second time-domain resources, whether to multiplex the first control information on the first shared channel on the first time-domain resource, and transmits the first shared channel on the first time-domain resource; and the second communication device receives the first shared channel on the first time-domain resource, and determines, based on the quantity of the first time-domain resources and/or the quantity of the second time-domain resources, to perform demultiplexing on the first shared channel to obtain the first control information.

In an implementation, the method further includes: The first communication device transmits the first shared channel on the first time-domain resource, and the second communication device receives the first shared channel on the first time-domain resource; the second communication device demultiplexes the first shared channel to obtain first control information and sixth data, where the sixth data is obtained by performing *N*₄-fold time-domain spreading on seventh data, and *N*₄ is a positive integer; and the second communication device performs *N*₄-fold time-domain despreading on the sixth data to obtain the seventh data.

In an implementation, the quantity of the second time-domain resources is P, the quantity of the first time-domain resources is Q, and both P and Q are positive integers; and that the first communication device determines, based on the quantity of the first time-domain resources and/or the quantity of the second time-domain resources, whether to multiplex the first control information on the first shared channel on the first time-domain resource includes: The first communication device determines, when Q is less than or equal to P, not to multiplex the first control information on the first shared channel on the Q first time-domain resources; or the first communication device determines, when Q is less than or equal to P, not to transmit the first shared channel on the Q first time-domain resources.

In an implementation, the quantity of the second time-domain resources is P, the quantity of the first time-domain resources is Q, and both P and Q are positive integers; and that the first communication device determines, based on the quantity of the first time-domain resources and/or the quantity of the second time-domain resources, whether to multiplex the first control information on the first shared channel on the first time-domain resource includes: The first communication device multiplexes the first control information on the first shared channel on a fifth time-domain resource when P is less than Q, where the fifth time-domain resource is a time-domain resource that is the first one in an overlapping part between the first time-domain resource and the second time-domain resource; or the fifth time-domain resource is a time-domain resource that is the first one in the first time-domain resource; or the fifth time-domain resource is a time-domain resource that is the first one in the second time-domain resource.

In an implementation, the quantity of the second time-domain resources is P, the quantity of the first time-domain resources is Q, and both P and Q are positive integers; and that the first communication device determines, based on the quantity of the first time-domain resources and/or the quantity of the second time-domain resources, whether to multiplex the first control information on the first shared channel on the first time-domain resource includes: The first communication device determines, when P is less than Q, to multiplex second control information on the first shared channel on the Q first time-domain resources, where a second control channel is used for carrying the second control information, and the second control channel is a control channel that is the first one in the first control channel; and/or the first communication device determines, when P is less than Q, not to transmit a third control channel, where a control channel other than the second control channel in the first control channel is the third control channel, and the second control channel is a control channel that is the first one in the first control channel.

In an implementation, the quantity of the second time-domain resources is P, the quantity of the first time-domain resources is Q, and both P and Q are positive integers; and that the first communication device determines, based on the quantity of the first time-domain resources and/or the quantity of the second time-domain resources, whether to multiplex the first control information on the first shared channel on the first time-domain resource includes: The first communication device determines, when P is less than Q, not to multiplex the first control information on the first shared channel on the Q first time-domain resources.

In an implementation, that the sixth data is obtained by performing the *N*₄-fold time-domain spreading on the seventh data includes: The first communication device maps the seventh data onto a fourth time-domain resource, where the fourth time-domain resource includes L time-domain sub-resources, the fourth time-domain resource is included in the first time-domain resource, and L is a positive integer; and the first communication device multiplies the seventh data by *N*₄ elements in a third sequence sequentially to obtain the sixth data, where the sixth data occupies Lx*N*₄ sub-resources, and the first time-domain resource includes the Lx*N*₄ sub-resources. In an implementation, a modulation scheme for the first control information is the same as a modulation scheme for first data.

In an implementation, the first resource is a data symbol in a slot, and the data symbol includes no demodulation reference signal.

In an implementation, the first control information includes but is not limited to any one of the following: uplink control information, downlink control information, or sidelink control information; and the first shared channel includes but is not limited to any one of the following: a physical uplink shared channel, a physical downlink shared channel, or a physical sidelink shared channel.

In an implementation, a DFT-s-OFDM waveform is used for the sixth data.

In an implementation, the time-domain spreading includes one or more of the following: a time-domain unit is a slot or a symbol.

In an implementation, the sixth data is obtained by performing *N*₅-fold frequency-domain spreading on the seventh data, and *N*₅ is a positive integer.

In an implementation, the frequency-domain spreading includes one or more of the following: resource element RE spreading or S-fold frequency-domain comb multiplexing, where S is a comb size of a frequency-domain resource occupied by the seventh data, and S is a positive integer.

For beneficial effects of the ninth aspect and some implementations, correspondingly refer to descriptions of the fifth aspect or sixth aspect and some implementations thereof. Details are not described herein again.

A tenth aspect provides a communication apparatus. The communication apparatus has functions for implementing the first aspect. For example, the communication apparatus includes a corresponding module or unit or means (means) for performing an operation in the first aspect. The module or unit or means may be specifically implemented by using software, or may be implemented by using hardware, or may be implemented by using a combination of software and hardware.

In a possible design, the communication apparatus includes: a processing unit, configured to multiplex first control information and first data to obtain second data, where the processing unit is further configured to perform time-domain spreading and/or frequency-domain spreading on the second data by using a first sequence to obtain third data that occupies a first resource; and a transceiver unit, configured to transmit the third data on the first resource via a first shared channel. The transceiver unit may perform receiving and transmitting in the first aspect, and the processing unit may perform processing other than the receiving and transmitting in the first aspect.

An eleventh aspect provides a communication apparatus. The communication apparatus has functions for implementing the second aspect. For example, the communication apparatus includes a corresponding module or unit or means (means) for performing an operation in the second aspect. The module or unit or means may be specifically implemented by using software, or may be implemented by using hardware, or may be implemented by using a combination of software and hardware.

In a possible design, the communication apparatus includes: a transceiver unit, configured to receive third data on a first resource via a first shared channel; and a processing unit, configured to performs time-domain despreading and/or frequency-domain despreading on the third data by using a first sequence, to obtain second data, where the processing unit is further configured to demultiplex the second data to obtain first control information and first data.

The transceiver unit may perform receiving and transmitting in the second aspect, and the processing unit may perform processing other than the receiving and transmitting in the second aspect.

A twelfth aspect provides a communication apparatus. The communication apparatus has functions for implementing the third aspect. For example, the communication apparatus includes a corresponding module or unit or means (means) for performing an operation in the third aspect. The module or unit or means may be specifically implemented by using software, or may be implemented by using hardware, or may be implemented by using a combination of software and hardware.

In a possible design, the communication apparatus includes: a processing unit, configured to determine to transmit a first shared channel on a first time-domain resource, where the first shared channel is used for carrying fourth data, the fourth data is obtained by performing *N*₂-fold time-domain spreading on fifth data, and *N*₂ is a positive integer, where the processing unit is further configured to obtain first information, where the first information indicates to transmit a first control channel on a second time-domain resource, the second time-domain resource is included in the first time-domain resource, and the first control channel is used for carrying first control information; and the processing unit is further configured to determine, based on a time-domain position of the second time-domain resource, whether to multiplex the first control information on the first shared channel on the first time-domain resource.

The transceiver unit may perform receiving and transmitting in the third aspect, and the processing unit may perform processing other than the receiving and transmitting in the third aspect.

A thirteenth aspect provides a communication apparatus. The communication apparatus has functions for implementing the fourth aspect. For example, the communication apparatus includes a corresponding module or unit or means (means) for performing an operation in the fourth aspect. The module or unit or means may be specifically implemented by using software, or may be implemented by using hardware, or may be implemented by using a combination of software and hardware.

In a possible design, the communication apparatus includes: a transceiver unit, configured to receive a first shared channel on a first time-domain resource; and a processing unit, configured to demultiplex the first shared channel to obtain first control information and fourth data, where the fourth data is obtained by performing *N*₂-fold time-domain spreading on fifth data, and *N*₂ is a positive integer, where the processing unit is further configured to perform *N*₂-fold time-domain despreading on the fourth data to obtain the fifth data.

The transceiver unit may perform receiving and transmitting in the fourth aspect, and the processing unit may perform processing other than the receiving and transmitting in the fourth aspect.

A fourteenth aspect provides a communication apparatus. The communication apparatus has functions for implementing the fifth aspect. For example, the communication apparatus includes a corresponding module or unit or means (means) for performing an operation in the fifth aspect. The module or unit or means may be specifically implemented by using software, or may be implemented by using hardware, or may be implemented by using a combination of software and hardware.

In a possible design, the communication apparatus includes: a processing unit, configured to determine to transmit a first shared channel on a first time-domain resource, where the first shared channel is used for carrying sixth data, the sixth data is obtained by performing *N*₄-fold time-domain spreading on seventh data, and *N*₄ is a positive integer, where the processing unit is further configured to obtain first information, where the first information indicates to transmit a first control channel on a second time-domain resource, the second time-domain resource is included in the first time-domain resource, and the first control channel is used for carrying first control information; and the processing unit is further configured to determine, based on a quantity of first time-domain resources and/or a quantity of second time-domain resources, whether to multiplex the first control information on the first shared channel on the first time-domain resource.

The transceiver unit may perform receiving and transmitting in the fifth aspect, and the processing unit may perform processing other than the receiving and transmitting in the fifth aspect.

A fifteenth aspect provides a communication apparatus. The communication apparatus has functions for implementing the sixth aspect. For example, the communication apparatus includes a corresponding module or unit or means (means) for performing an operation in the sixth aspect. The module or unit or means may be specifically implemented by using software, or may be implemented by using hardware, or may be implemented by using a combination of software and hardware.

In a possible design, the communication apparatus includes: a transceiver unit, configured to receive a first shared channel on a first time-domain resource; and a processing unit, configured to demultiplex the first shared channel to obtain first control information and sixth data, where the sixth data is obtained by performing *N*₄-fold time-domain spreading on seventh data, and *N*₄ is a positive integer, where the processing unit is further configured to perform *N*₄-fold time-domain despreading on the sixth data to obtain the seventh data.

The transceiver unit may perform receiving and transmitting in the sixth aspect, and the processing unit may perform processing other than the receiving and transmitting in the sixth aspect.

According to a sixteenth aspect, this application provides a communication apparatus. The communication apparatus includes an interface circuit and one or more processors. The one or more processors are coupled to one or more memories. The one or more memories are configured to store some or all of necessary computer programs or instructions for implementing functions in any one of the first aspect to the ninth aspect.

The one or more processors may execute the computer programs or instructions. When the computer programs or instructions are executed, the communication apparatus is enabled to implement the method in any possible design or implementation in the first aspect to the ninth aspect. The interface circuit is configured to implement a communication function in the communication apparatus and/or a communication function between the communication apparatus and another apparatus or component.

In a possible design, the processor is configured to communicate with another apparatus or component through the interface circuit.

In a possible design, the communication apparatus may further include the memory.

The communication apparatus may be a terminal, or a communication module in a terminal, or a chip responsible for a communication function in a terminal, such as a modem chip (also referred to as a baseband chip), or an SoC including a modem module, or an SIP chip.

The communication apparatus may be a network device, or a module (such as a circuit, a chip, or a chip system) in a network device, or a logical node, a logical module, or software that can implement all or some functions of a network device.

A seventeenth aspect provides a communication system. The communication system includes at least one in the communication apparatus according to the tenth aspect or the eleventh aspect.

An eighteenth aspect provides a communication system. The communication system includes at least one in the communication apparatus according to the twelfth aspect or the thirteenth aspect. A nineteenth aspect provides a communication system. The communication system includes at least one in the communication apparatus according to the fourteenth aspect or the fifteenth aspect. A twentieth aspect provides a computer-readable storage medium. The computer-readable storage medium stores computer program code or instructions. When a computer reads and executes the computer program code or the instructions, the method in any one of the possible implementations in the first aspect to the ninth aspect is implemented.

A twenty-first aspect provides a computer program product. The computer program product includes computer program code or instructions. When a computer reads and executes the computer program product, the method in any one of the possible implementations in the first aspect to the ninth aspect is implemented.

A twenty-second aspect provides a computer program. When the computer program is run, the method in any one of the possible implementations in the first aspect to the sixth aspect is implemented.

It should be understood that, for beneficial effects of the tenth aspect to the twenty-second aspect, refer to the first aspect to the ninth aspect and any one of the possible implementations thereof. Details are not described herein again.

### BRIEF DESCRIPTION OF DRAWINGS

FIG. 1 and FIG. 2 are diagrams of communication systems suitable for this application;
FIG. 3 is a diagram of retransmission in time domain on a shared channel suitable for embodiments of this application;
FIG. 4 is a diagram of a spreading operation applicable to embodiments of this application;
FIG. 5 is a diagram of overlapping between a shared channel and a control channel in time domain;
FIG. 6 is a diagram of multiplexing control information onto a shared channel;
FIG. 7a and FIG. 7b are diagrams of a method for processing control information when a shared channel and a control channel are transmitted in multiple slots;
FIG. 8a and FIG. 8b are diagrams of multiplexing control information onto a shared channel in a case of time-domain spreading and in a case of frequency-domain spreading;
FIG. 9 is an interaction flowchart of a communication method according to this application;
FIG. 10a to FIG. 13k are diagrams of time-domain spreading or frequency-domain spreading according to embodiments of this application;
FIG. 14a and FIG. 14b are diagrams of repeated transmission according to an embodiment of this application;
FIG. 15 is a diagram of a combination of time-domain spreading and repeated transmission according to an embodiment of this application;
FIG. 16 is a diagram of a structure of multiplexing control information onto a shared channel before time-domain spreading according to an embodiment of this application;
FIG. 17 is an interaction flowchart of another communication method according to this application;
FIG. 18a and FIG. 18b are diagrams of a control information mapping method when a control channel and a spread shared channel overlap in time domain;
FIG. 19 is a diagram of a conflict between a control channel and a spread shared channel on an initial slot;
FIG. 20 is an interaction flowchart of still another communication method according to this application;
FIG. 21a and FIG. 21b are diagrams of a control information mapping method when multiple control channels and multiple spread shared channels overlap in time domain;
FIG. 22 is a possible example block diagram of a communication apparatus in an embodiment of this application; and
FIG. 23a and FIG. 23b are diagrams of a structure of a terminal according to an embodiment of this application.

### DESCRIPTION OF EMBODIMENTS

The following describes technical solutions in this application with reference to accompanying drawings.

The technical solutions in embodiments of this application may be applied to various communication systems, such as a long term evolution (long term evolution, LTE) system, an LTE frequency division duplex (frequency division duplex, FDD) system, LTE time division duplex (time division duplex, TDD), a 5th generation (5th generation, 5G) system or new radio (new radio, NR), and a future communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an Internet of Things (Internet of Things, IoT) communication system. The technical solutions provided in this application may be further applied to a non-terrestrial network (non-terrestrial network, NTN) system, for example, inter-satellite communication and satellite communication.

For example, a satellite communication system includes a satellite base station and a terminal device. The satellite base station provides a communication service for the terminal device. The satellite base station may also communicate with a base station. A satellite may serve as a base station, or may serve as a terminal device. The satellite may be an uncrewed aerial vehicle, a hot air balloon, a low-earth-orbit satellite, a medium-earth-orbit satellite, a high-earth-orbit satellite, or the like. Alternatively, the satellite may be a non-terrestrial base station, a non-terrestrial device, or the like.

For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication.

A device in the communication system may transmit a signal to another device or receive a signal from another device. The signal may include a reference signal, information, signaling, data, or the like. The device may be replaced with an entity, a network entity, a communication device, a communication module, a node, a communication node, or the like.

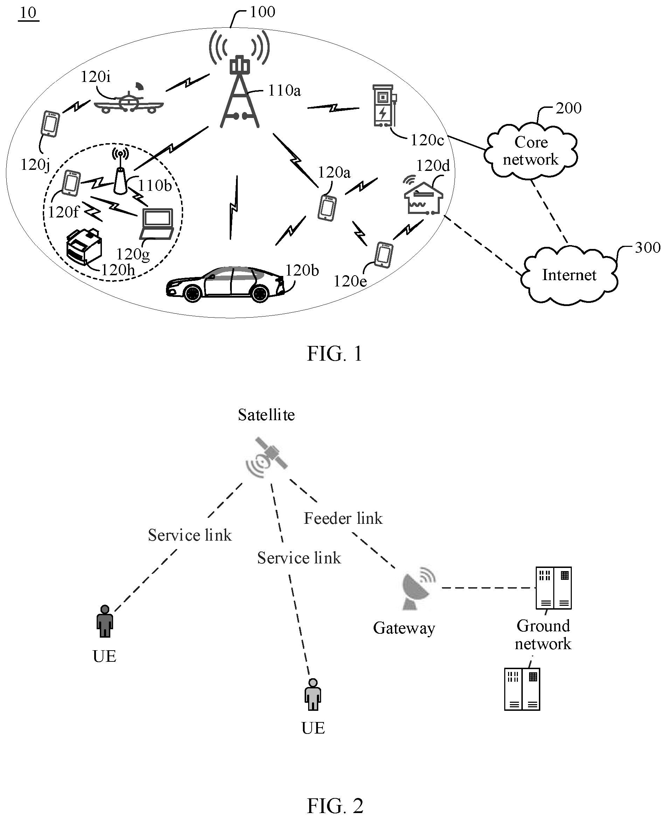

FIG. 1 is a diagram of a communication system according to an embodiment of this application. As shown in FIG. 1, the communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the CN 200 in a wireless or wired manner. A core network device in the CN 200 and the RAN node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4th generation (4th generation, 4G) mobile communication system, a 5th generation (5th generation, 5G) mobile communication system, or a future-oriented evolved system (for example, a 6th generation (6th generation, 6G) mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 sometimes may also be referred to as an access network device, a RAN entity, an access node, or the like, and forms a part of the communication system, to help the terminal implement radio access. A plurality of RAN nodes 110 in the communication system may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, both the RAN node 110 and the terminal 120 are referred to as communication apparatuses. For example, the network elements 110a and 110b in FIG. 1 may be understood as communication apparatuses having base station functions, and the network elements 120a to 120j may be understood as communication apparatuses having terminal functions.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, an on-board device, or the like. For example, an access network device in a vehicle-to-everything (vehicle-to-everything, V2X) technology may be a roadside unit (roadside unit, RSU). All or some functions of the RAN node in this application may alternatively be implemented through a software function run on hardware, or may be implemented through a virtualization function instantiated on a platform (for example, a cloud platform). A communication module, circuit, or chip for performing a corresponding communication function may be further disposed in the RAN node. Program instructions for performing a corresponding communication function and corresponding program instructions may be further configured in the RAN node. The RAN node in this application may alternatively be a logical node, a logical module, or software that can implement all or some functions of the RAN node.

In another possible scenario, a plurality of RAN nodes cooperate to assist a terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal (terminal) 120 may be a device or module that accesses the communication system and has a corresponding communication function. The terminal may also be referred to as a terminal device, user equipment (user equipment, UE), a mobile station, a mobile terminal, or the like. The terminal may be widely used in various scenarios, such as device-to-device (device-to-device, D2D), vehicle to everything (vehicle to everything, V2X) communication, machine-type communication (machine-type communication, MTC), Internet of Things (Internet of Things, IOT), virtual reality, augmented reality, industrial control, autonomous driving, remote medical, a smart grid, smart furniture, smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, a transport vehicle with a wireless communication function, a communication module, or the like. A device form factor of the terminal is not limited in embodiments of this application. A communication module, circuit, or chip for performing a corresponding communication function may be typically disposed in the terminal. Program instructions for performing a corresponding communication function may be further configured in the terminal.

The RAN 100 and the terminal 120 may be deployed on land, including an indoor or outdoor scenario, and a handheld or on-board scenario; or may be deployed on water; or may be deployed on an airplane, a balloon, and a satellite in the air. Scenarios of the RAN 100 and the terminal 120 are not limited in embodiments of this application.

The CN 200 may be a 6G core network, or may be a 5G core network, or may be an evolved 5G core network. A 5G core network is used as an example. The CN 200 includes an access and mobility management function (access and mobility management function, AMF) network element responsible for mobility management, access management, and other services, a session management function (session management function, SMF) network element responsible for session management, a user plane function (user plane function, UPF) network element responsible for user plane data packet routing and forwarding and quality of service (quality of service, QoS) control, a policy control function (policy control function, PCF) network element, and the like. The core network elements may operate independently, or may be combined to implement some control functions. For example, the AMF, the SMF, and the PCF may be combined as one core network device.

It should be understood that, the foregoing names are defined only for ease of distinguishing between different functions, and should not constitute any limitation on this application. This application does not exclude a possibility that another name is used in the 5G network and another future network. For example, in the 6G network, the terms in 5G may still be used for some or all of the network elements, or other names may be used.

It may be understood that FIG. 1 is merely an example, and does not constitute any limitation on the protection scope of this application. The communication method provided in embodiments of this application may further involve a network element that is not shown in FIG. 1. Certainly, the communication method provided in embodiments of this application may alternatively include only some network elements shown in FIG. 1.

FIG. 2 is a diagram of another communication system suitable for embodiments of this application. As shown in FIG. 2, an NTN is used as an example for the communication system. For example, the system may include a ground station (gateway, GW), a satellite (satellite), a terminal device, a ground network (ground network), and the like. For distinction from a terrestrial communication system, the gateway herein is referred to as a ground station. The ground station can provide functions similar to those of a gateway in the terrestrial communication system, for example, establish a connection to a terminal device and communicate with a server. The ground station further has functions such as monitoring and fault query for satellites, and packet switching and interface protocol conversion for communication data. For example, a link between a ground station and a satellite is referred to as a feeder link (feeder link), and a link between a satellite and a terminal device is referred to as a service link (service link).

Based on deployment scenarios of satellites and ground networks, satellite network architectures may be classified into three types: a transparent satellite architecture, a satellite backhaul architecture, and a regenerative satellite architecture. An architecture in which a terminal device is connected to a ground access network through a satellite may be referred to as the transparent satellite architecture. An architecture in which a terminal device is connected to a ground access network and then connected to a ground network through a satellite may be referred to as the satellite backhaul architecture. In addition, an architecture in which an access network device is included in a satellite is referred to as the regenerative satellite architecture.

For ease of understanding embodiments of this application, terms or techniques in this application are briefly described first.

### 1. Quantity of times of transmission:

The quantity of times of transmission is a quantity of times of transmitting a same signal (for example, a reference signal), that is, a quantity of times of repeated transmitting. Optionally, the quantity of times of transmission may be in time domain, or may be in frequency domain, or may be in spatial domain or code domain. This is not limited in this application.

For example, transmission on a time-domain unit #1 and retransmission on a subsequent time-domain unit (for example, a slot) mean that a same reference signal is determined to be continuously transmitted multiple times. Optionally, transmission on the time-domain unit #1 may be initial transmission or retransmission of the reference signal. This is not limited in this application.

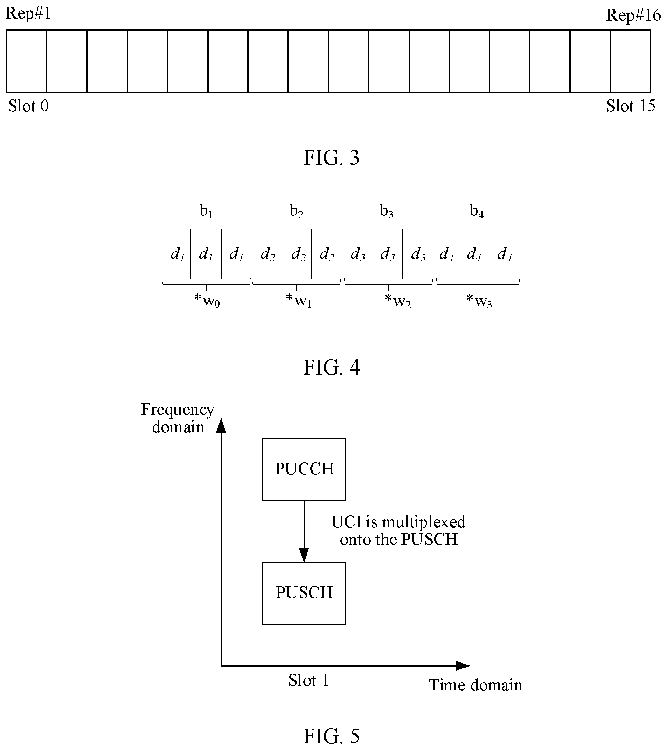

FIG. 3 is a diagram of retransmission in time domain on a shared channel (for example, a PUSCH) suitable for embodiments of this application. As shown in FIG. 3, a horizontal axis represents time domain. Using a slot as an example, the time domain includes a slot 0 to a slot 15, indicating 16 repetitions of transmission on the PUSCH, including Rep#1, ..., and Rep#16, to increase uplink transmit power.

### 2. Time-domain unit and frequency-domain unit:

Data or information may be carried on time-frequency resources.

In time domain, a time-domain resource may include one or more time-domain units (which may also be referred to as time units). In an embodiment of this application, one time unit may include several time-domain resources. The time-domain unit is, for example, a radio frame (radio frame, RF). The time-domain resource included in the time-domain unit is, for example, a subframe (subframe), a frame, a half-subframe or a half-frame, a slot (slot), a sub-slot (sub-slot), a mini-slot (mini-slot), a partial slot (partial slot), or an orthogonal frequency division multiplexing (orthogonal frequency division multiplexing, OFDM) symbol (symbol). Alternatively, the time-domain unit may be a set of one or more time-domain resources. For example, the time-domain unit is one or more OFDM symbols in one slot. For example, a quantity of the one or more OFDM symbols is 6, 7, 12, or 14. The one or more time units may be consecutive or discrete in terms of time. Optionally, in an embodiment of this application, the time-domain resource may also be referred to as a time-domain subunit. In other words, the "time-domain resource" and the "time-domain subunit" may be a same concept and interchangeable. In addition, duration of the slot may be related to a subcarrier spacing. For example, when a subcarrier spacing is 15 kilohertz (kHz), duration of one slot is 1 millisecond (ms); when a subcarrier spacing is 30 kHz, duration of one slot is 0.5 ms; or when a subcarrier spacing is 60 kHz, duration of one slot is 0.25 ms. It follows that, when a subcarrier spacing is 15x2^{µ}, duration of one slot is 2^{-µ} ms, where µ = 0, 1, 2, ...

In frequency domain, a frequency-domain resource may include one or more frequency-domain units. A frequency-domain unit may be a resource element (resource element, RE), a resource block RB, a sub-channel (sub-channel), a resource pool (resource pool), a resource set (RB set), a bandwidth (bandwidth), a BWP, a carrier (carrier), a channel (channel), an interlace (interlace) RB, or the like. Optionally, one carrier may include one or more BWPs. Optionally, one BWP may include one or more resource pools. One BWP may include one or more RB sets. Optionally, one resource pool may include one or more RBs or sub-channels. Optionally, one sub-channel may include one or more RBs. One RB may include one or more REs. Optionally, in an embodiment of this application, an RE may be equivalent to a subcarrier. In other words, one RE is one subcarrier, or one subcarrier is one RE.

### 3. Spreading (spreading):

Spreading is a method in which one or a group of same signals are directly multiplied by a specific sequence (for ease of description, the sequence is referred to as a first sequence or a sequence #A) in time domain and/or frequency domain, and spread onto more resources for transmission. Assuming that a to-be-transmitted signal is d and a length of a sequence #A is N_{SF}, a spreading operation is performed by using the sequence #A, obtaining a signal b, bi = wᵢxdi, where i = 0, 1, ..., N_{SF}-1. For ease of description, wᵢ is referred to as an element in the sequence #A. In other words, the sequence #A whose length is N_{SF} includes N_{SF} elements. It may be understood that the element may be replaced with another name, for example, a code element.

FIG. 4 is a diagram of a spreading operation applicable to embodiments of this application. As shown in FIG. 4, it is assumed that a to-be-transmitted signal d occupies 12 resources, a length of a sequence #A is 4, and the sequence #A is [w₀ w₁ w₂ w₃]. The to-be-transmitted signal d is spread on the 12 resources, obtaining signals: w₀xd1, w₀xd1, w₀xd1, w₁xd2, w₁xd2, w₁xd2, w₂xd3, w₂xd3, w₂xd3, w₃xd4, w₃xd4, and w₃xd4. In FIG. 4, di represents a signal corresponding to an i^{th} element (wᵢ₋₁) in the sequence #A. It may be understood that content carried on different resources may be the same or may be different. This is not limited. As shown in FIG. 4, for example, in a group of symbols corresponding to w₀ (that is, the first three symbols), content carried on different symbols may be the same or may be different. For ease of description, in FIG. 4, same di is used as an example for description. This is not limited. In addition, content corresponding to different elements in the sequence #A may be the same or may be different. As shown in FIG. 4, for example, content carried on a symbol corresponding to w₀ and content carried on a symbol corresponding to w₁ may be the same or may be different. This is not limited. Optionally, the 12 resources may include a frequency-domain resource, a spatial-domain resource, or a time-domain resource (for example, an OFDM symbol).

A specific form of the sequence #A is not limited.

In an example, the sequence #A is a binary sequence. For example, if a length of the sequence #A is 2, the sequence #A may be any one of the following: [+1 +1] and [+1 -1]. In another example, if a length of the sequence #A is 4, the sequence #A may be any one of the following: [+1 +1 +1 +1], [+1 +1 -1 -1], [+1 -1 +1 -1], and [+1 -1 -1 +1]. In another example, if a length of the sequence #A is 8, the sequence #A may be any one of the following: [+1 +1 +1 +1 +1 +1 +1 +1], [+1 -1 +1 -1 +1 -1 +1 -1], [+1 +1 -1 -1 +1 +1 -1 -1], [+1 -1 -1 +1 +1 -1 -1 +1], [+1 +1 +1 +1 -1 -1 -1 -1], [+1 -1 +1 -1 -1 +1 -1 +1], [+1 +1 -1 -1 -1 -1 +1 +1], or [+1 -1 -1 +1 -1 +1 +1 - 1].

In another example, the sequence #A is a complex number sequence. For example, if a length of the sequence #A is 2, the sequence #A may be any one of the following: [+1 +j] and [+1 -j]. In another example, if a length of the sequence #A is 4, the sequence #A may be any one of the following: [+1 +1 +1 +1], [+1 -j -1 +j], [+1 -1 + -1], and [+1 +j -1 -j]. In another example, if a length of the sequence #A is 8, the sequence #A may be any one of the following: [+1 +1 +1 +1 +1 +1 +1 +1], [+1 -1 +1 -1 +1 -1 +1 -1], [+1 +1 -j -j -1 -1 j j], [+1 -1 -j j -1 +1 j -j], [+1 +1 - 1 -1 +1 +1 -1 -1], [+1 -1 -1 +1 +1 -1 -1 +1], [+1 +1 j j -1 -1 -j -j], or [+1 -1 j -j -1 +1 -j j]. Further, optionally, a row or column in a discrete Fourier transform (discrete Fourier transform, DFT) or inverse discrete Fourier transform (inverse discrete Fourier transform, IDFT) matrix may be used as the sequence #A.

For example, for a sequence whose length is N_{SF}, there are at most N_{SF} orthogonal sequences described in the following manner: ${w}_{n} \left(k\right) = {e}^{- j \frac{2 πnk}{{N}_{SF}}} , k = 0 , 1 , … , {N}_{SF} - 1 , n = 0 , 1 , … , {N}_{SF} - 1 ,$ or ${w}_{n} \left(k\right) = {e}^{j \frac{2 πnk}{{N}_{SF}}} , k = 0 , 1 , … , {N}_{SF} - 1 , n = 0 , 1 , … , {N}_{SF} - 1$ *wₙ*(*k*) represents a k^{th} element in the sequence #A.

The following further describes time-domain spreading by using spreading on an OFDM symbol as an example. For example, a signal of a time-domain symbol on a symbol n satisfies formula 1: $\begin{matrix}{s}_{\left(l⋅M+m\right)} \left(t\right) = {w}_{n} \left(\left⌊m/M\right⌋\right) ⋅ {s}_{\left(l⋅M+m mod M\right)} \left(t\right) \\ m = 0 , 1 , … , {N}_{SF} ⋅ M - 1 \\ l = 0 , 1 , … , {N}_{SF} - 1\end{matrix}$ (formula 1)

Herein, *sₙ*(*t*) represents the signal of the time-domain symbol on the symbol *n, wₙ*(*m*) represents an m^{th} element in a sequence #A whose number is n, *N_{SF}* represents a length of the sequence #A, M represents a quantity of symbols corresponding to one element, *t* represents time, and $\left⌊x\right⌋$ represents rounding down x.

For example, *sₙ*(*t*) is a time-domain signal obtained by mapping a signal (for example, data and/or a reference signal) onto subcarriers on a symbol *l* and then performing inverse fast Fourier transform (inverse fast Fourier transform, IFFT).

For example, in (formula 1), when M = 1, spreading (or time-domain spreading) may be referred to as direct spreading (spreading).

For example, in (formula 1), when M > 1, spreading (or time-domain spreading) may be referred to as block-wise spreading (block-wise spreading).

For example, in (formula 1), when *sₙ*(*t*) is replaced with a frequency-domain signal *d(k),* the formula may be a manner of describing frequency-domain spreading. For example, the frequency-domain signal *d(k)* satisfies formula 2: $d \left(l⋅M+m\right) = {w}_{n} \left(\left⌊m/M\right⌋\right) ⋅ d \left(l⋅M+m mod M\right)$ (formula 2)

Similarly, M represents a quantity of frequency-domain resources corresponding to one element. It may be understood that the sequence #A may also be referred to as a spreading sequence or a time-domain spreading sequence, and a name of the sequence #A does not limit the protection scope of embodiments of this application.

### 4. Comb (comb):

When a signal is mapped onto a corresponding symbol, on corresponding frequency-domain resources, one reference signal is mapped onto every N resources, and no reference signal is mapped onto the other N-1 resources. This manner of mapping on frequency-domain resources is referred to as a comb. A value of N in the comb is referred to as a comb size. In this application, the comb size may also be referred to as Comb-N. Optionally, within a specific frequency-domain bandwidth, the comb may be further described as Y REs from Y×N REs, which are resources in each symbol, where there is one reference signal on every N REs, Y is a number greater than 0, and N is a positive integer. In this way, the N REs can be separately used by different communication devices. Optionally, assuming that the frequency-domain bandwidth includes K PRBs, a value of Y is Nre_rbxK/N, where Nre_rb represents a quantity of REs in one PRB, for example, Nre_rb = 12. For example, a value of K is determined based on a bandwidth of a frequency-domain resource for a reference signal, for example, a bandwidth of a resource pool, a bandwidth of a carrier, or a bandwidth of a BWP.

Optionally, for reference signals in a comb state, a total of N orthogonal frequency-domain resources are used for the reference signals in frequency domain. The N orthogonal frequency-domain resources may also be referred to as comb offsets (Comb offset). In this application, the comb offset may also be referred to as a frequency-domain comb resource element offset (comb RE offset), a resource element offset (RE offset), an offset value, or the like. Values corresponding to the comb offsets may be [0, 1, ..., N-1] or [1, 2, ..., N]. When a reference signal is mapped onto one of N REs, there may be N different mapping positions on the frequency-domain resource for the reference signal, that is, N different comb offsets.

The foregoing briefly describes terms in this application, which are not described in detail again in the following embodiments. In addition, the foregoing descriptions of the terms are merely descriptions for ease of understanding, and do not limit the protection scope of embodiments of this application.

In communication systems, for example, in an application scenario where base stations are deployed on satellites and terminals are located on the ground, limited transmit power of the terminals may result in poor quality of communication links between the terminals and the base stations. A repetition-based uplink coverage enhancement technology is introduced to compensate for the insufficient uplink transmit power of the terminals. However, due to multiple (for example, 32) transmission repetitions, the systems incur low resource utilization and significant reduction of multiplexing capacity. Therefore, an orthogonal cover code (orthogonal cover code, OCC) technology is introduced to enhance uplink capacity.

FIG. 5 is a diagram of overlapping (overlapping) between a shared channel (for example, a PUSCH) and a control channel (for example, a PUCCH) in time domain. It should be understood that the PUSCH may be configured to transmit uplink data, and the PUCCH may be configured to transmit uplink control information UCI. As shown in FIG. 5, a horizontal axis represents time domain, and a vertical axis represents frequency domain. For UE, if the PUSCH and the PUCCH conflict in time domain, or if the PUSCH and the PUCCH overlap in time domain (for example, a slot 1), the UE may multiplex the UCI on the PUSCH, indicating that the UE may transmit the UCI and data via the PUSCH in the slot 1, and does not transmit the PUCCH or drops the PUCCH.

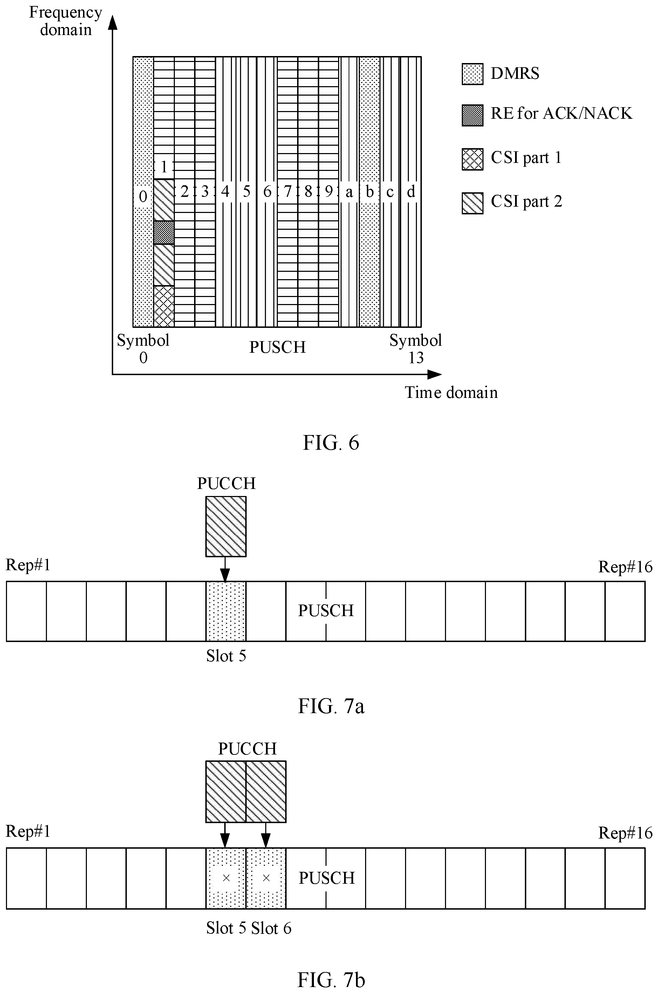

FIG. 6 is a diagram of a mapping manner in which control information (for example, UCI) is multiplexed onto a shared channel (for example, a PUSCH). As shown in FIG. 6, a horizontal axis represents time domain using one slot as an example, where the slot includes 14 OFDM symbols; and a vertical axis represents frequency domain using an RE as an example. When a PUCCH and the PUSCH overlap in time domain, encoded UCI bits on the PUCCH may be multiplexed onto the PUSCH for transmitting, and the PUCCH is not transmitted. A manner of mapping the encoded UCI bits onto the PUSCH may be: mapping the UCI in frequency domain first and then mapping the UCI in time domain, starting from the first symbol (for example, a symbol 1) after the first demodulation reference signal (demodulation reference signal, DMRS) symbol. For example, the encoded UCI bits (including channel state information (channel state information, CSI) part 1, CSI part 2, and ACK/NACK) are mapped onto the symbol 1.

FIG. 7a and FIG. 7b are diagrams of a method for processing control information (for example, UCI) when a control channel (for example, a PUCCH) and a shared channel (for example, a PUSCH) are transmitted in multiple slots. As shown in FIG. 7a, a horizontal axis represents time domain using slots as an example, with 16 repetitions of transmission on the PUSCH, including Rep#1, ..., and Rep#16. When the PUSCH and the PUCCH overlap in a single slot (for example, a slot 5), in the slot 5, UE may multiplex encoded UCI bits on the PUCCH onto the PUSCH, and drop the PUCCH. As shown in FIG. 7b, a horizontal axis represents time domain using slots as an example, with 16 repetitions of transmission on the PUSCH, including Rep#1, ..., and Rep#16. When the PUSCH and the PUCCH overlap in multiple slots (for example, a slot 5 and a slot 6), UE may drop the PUSCH and transmit the PUCCH. In other words, the UE may transmit the UCI in the slot 5 and the slot 6.

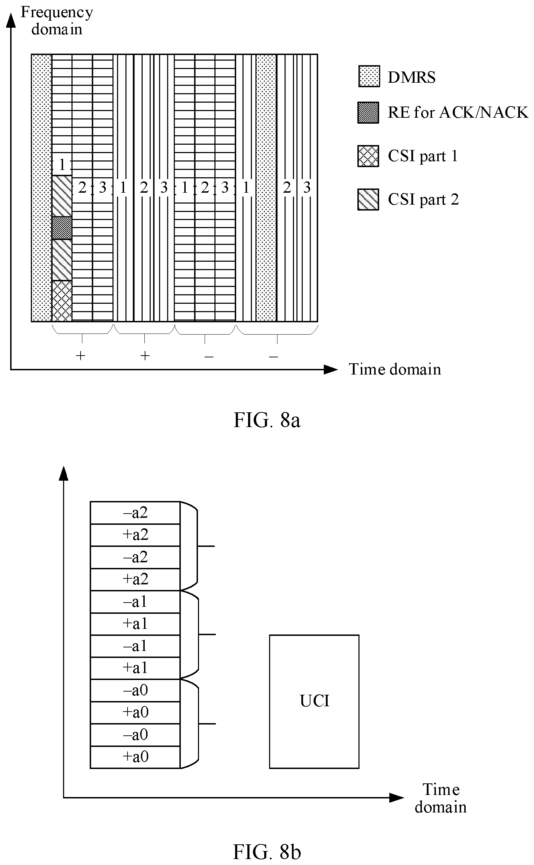

FIG. 8a and FIG. 8b are diagrams of multiplexing control information (for example, UCI) onto a shared channel (for example, a PUSCH) in a case of time-domain spreading and in a case of frequency-domain spreading. As shown in FIG. 8a, a horizontal axis represents time domain using a slot as an example. On the PUSCH, four-fold spreading may be performed in time domain. A spreading sequence may be +1 +1 -1 -1, or spreading elements/spreading code elements in the spreading sequence are sequentially +1, +1, -1, and -1. Assuming that a PUCCH and the PUSCH overlap in time domain, the UCI may be multiplexed onto the PUSCH in the mapping manner shown in FIG. 6. For example, a transport block (transport block, TB) may be mapped onto the symbol 1. Because different parts spread by using the spreading code elements have different content, after despreading, an overlapping part between the UCI and data may cause a decoding error. If there is a multi-user multiplexing scenario, the UCI cannot be obtained through despreading. As shown in (FIG. 8b, a vertical axis represents frequency domain using an RE as an example. On the PUSCH, four-fold spreading is performed in frequency domain. A spreading sequence may be +1 -1 +1 -1, or spreading elements/spreading code elements in the spreading sequence are sequentially +1, -1, +1, and -1. With reference to the UCI mapping scheme described in Table 4, when the PUCCH and the PUSCH overlap in time domain, the UCI may be multiplexed onto the PUSCH, and some spreading code elements on REs may be covered by the UCI, while the remaining code elements are still data. In this case, in a multi-user multiplexing scenario, the UCI cannot be obtained through despreading and some data cannot be obtained through despreading, affecting transmission performance.

In conclusion, the foregoing solutions provide processing manners when the PUCCH and the PUSCH conflict in time domain, for example, a method for multiplexing the UCI onto the PUSCH and a method for mapping the UCI onto the PUSCH. However, it is found through research that, in the current solutions, processing manners when a PUCCH and a spread PUSCH conflict after time-domain spreading and/or frequency-domain spreading on the PUSCH are not considered, for example, whether to multiplex UCI and how to multiplex UCI.

In view of this, this application provides a communication method and a communication apparatus, to provide a solution of multiplexing first control information onto a first control channel in a scenario of time-domain spreading and/or frequency-domain spreading on a first shared channel, so that transmission performance can be improved. It should be understood that, in embodiments of this application, unless otherwise stated or there is a logical conflict, terms and/or descriptions in different embodiments are consistent and may be mutually referenced, and technical features in different embodiments may be combined based on an internal logical relationship thereof, to form a new embodiment.

It should be further understood that, in some embodiments, a device in an existing network architecture is mainly used as an example for description (for example, a network device and a terminal device). It should be understood that a specific form of the device is not limited in embodiments of this application. For example, all devices that can implement same functions in the future are suitable for embodiments of this application.

It may be understood that, in the method embodiments, methods and operations implemented by the device (for example, a network device or a terminal device) may alternatively be implemented by a component (for example, a chip or a circuit) of the device.

In this application, "transmitting information" may be understood as that a device transmits information to another device, or may be understood as that a logical module in a device transmits information to another logical module. For example, "a network device transmits information" may be understood as that the network device transmits information to another device (for example, a terminal), or may be understood as that a logical module 1 in the network device transmits information to a logical module 2 in the network device.

In this application, "receiving information" may be understood as that a device receives information from another device, or may be understood as that a logical module in a device receives information from another logical module. For example, "a network device receives information" may be understood as that the network device receives information from another device (for example, a terminal), or may be understood as that a logical module 1 in the network device receives information from a logical module 2 in the network device.

In addition, in this application, "transmitting information to... (an access network device)" may be understood as that a destination of the information is the access network device, and may include directly or indirectly transmitting the information to the access network device. "Receiving information from... (an access network device)" may be understood as that a source of the information is the access network device, and may include directly or indirectly receiving the information from the access network device. The information may undergo necessary processing, for example, a format change, between the source for transmitting the information and the destination. However, the destination may understand valid information from the source. Similar descriptions in this application may be understood similarly, and details are not described herein again.

In this application, "communication" may also be described as "data transmission", "information transmission", "data processing", or the like. "Transmission" includes "transmitting" and "receiving". "Transmission" may also be described as "output", and descriptions are not repeated below.

In embodiments, "optionally, the method further includes..." may be understood as that all these steps may be performed, or all these steps may not be performed, or only some of these steps may be performed. This is not limited in this application.

In embodiments of this application, the term "example", "for example", or the like is used to represent giving an example, an illustration, or a description. Any embodiment or design scheme described as an "example" in this application should not be explained as being more preferred or having more advantages than another embodiment or design scheme. To be precise, the word "example" is for presenting a concept in a specific manner.

It should be understood that the "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that, in embodiments of this application, sequence numbers of processes do not mean a sequence of execution. The sequence of execution of the processes should be determined based on functions and internal logic of the processes, and should not constitute any limitation on an implementation process of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when", "if", and "in a case that" all mean that a network element performs corresponding processing in an objective situation, but do not constitute a limitation on time, do not require that the device has a determining action during implementation, and do not mean another limitation. In addition, in this application, descriptions of the conditions "when", "if", and "in a case that" may be understood as necessary conditions, and whether the conditions are sufficient conditions or sufficient and necessary conditions is not limited. For example, "performing B in the case of A" may be understood as "performing B when at least A is satisfied".

In addition, in embodiments of this application, "B corresponding to A" indicates that B is associated with A, and B may be determined based on A. However, it should be further understood that determining B based on A does not mean that B is determined based only on A. B may alternatively be determined based on A and/or other information.

In embodiments of this application, the terms "system" and "network" may be used interchangeably. "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between associated objects. "At least one of the following items (pieces)" or a similar expression thereof means any combination of these items, including a singular item (piece) or any combination of plural items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

It needs to be noted that, in this application, during comparison between A and B, a specific implementation of the description of "when A is greater than or equal to B, performing a manner A; and when A is less than or equal to B, performing a manner B" may be "when A is greater than or equal to B, performing the manner A; or when A is less than B, performing the manner B"; or may be "when A is greater than B, performing the manner A; or when A is less than or equal to B, performing the manner B". This is not limited in this application.

The following further describes a communication method and apparatus provided in this application with reference to the accompanying drawings. It may be understood that, in this application, an example in which a first communication device and a second communication device are used as execution bodies for the interaction examples is used for description. However, the execution bodies for the interaction examples are not limited in this application. In this application, the first communication device or the second communication device may be a network device, or a module (such as a circuit, a chip, or a chip system) in a network device, or a logical node, a logical module, or software that can implement all or some network functions. Alternatively, the first communication device or the second communication device may be a terminal device, or a communication module in a terminal device, or a circuit or chip responsible for a communication function in a terminal (such as a modem chip (also referred to as a baseband chip), or an SoC chip including a modem core, or an SIP chip).

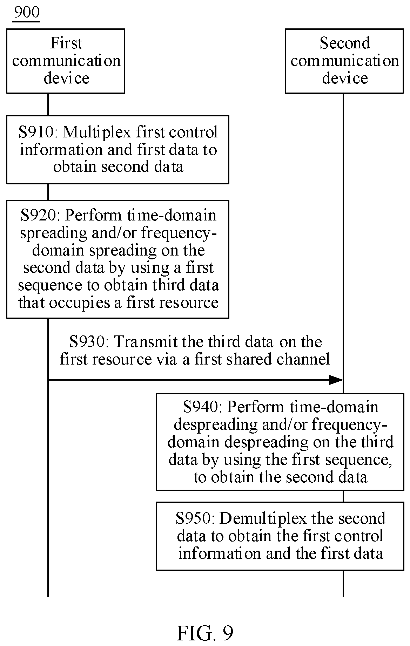

FIG. 9 is a schematic flowchart of a communication method 900 according to an embodiment of this application. As shown in FIG. 9, the method includes the following plurality of steps.

S910: The first communication device multiplexes first control information and first data to obtain second data.

For example, the first control information may be downlink control information (downlink control information, DCI), uplink control information (uplink control information, UCI), or sidelink control information (sidelink control information, SCI). This is not limited in this application.

It should be understood that, for multiplexing (multiplexing) herein, that the first control information and the first data are multiplexed to obtain the second data may be understood as: arranging the first control information and the first data in a predefined manner on a time-domain resource carrying the first data. For the predefined arrangement manner, refer to the foregoing description of FIG. 6. For example, if the first data occupies a symbol 0 to a symbol 2, the first control information is multiplexed in frequency domain starting from the symbol 0.

Optionally, a modulation scheme for the first control information is the same as a modulation scheme for the first data.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device multiplexes the first control information and the first data to obtain the second data. In another example, a baseband chip (or a baseband part) or a processor of the network device multiplexes the first control information and the first data to obtain the second data.

For example, the second communication device is a terminal device, or a module (such as a circuit, a chip, or a chip system) in a terminal device, or a logical node, a logical module, or software that can implement all or some network functions.

For example, the terminal device multiplexes the first control information and the first data to obtain the second data. In another example, a baseband chip (or a baseband part) or a processor of the terminal device multiplexes the first control information and the first data to obtain the second data.

In a first implementation, if a first control channel and a first shared channel overlap on a first resource, the first communication device may multiplex the first control information and the first data to obtain the second data. In this case, the second data may be considered as a combination of the first data and the first control information, or the second data includes the first control information and the first data.

In other words, that the first control channel and the first shared channel overlap may be considered as a trigger condition for the first communication device to multiplex the first control information and the first data to obtain the second data. Optionally, the first control channel and the first shared channel may overlap on the second resource in the first resource, or the first control channel and the first shared channel may overlap on another resource in the first resource. This is not limited in this application.

For example, the first resource may be a time-domain resource and/or a frequency-domain resource. In this application, the first resource is used for transmitting third data. The third data is described in step S920 below.

It should be understood that the first control channel is used for carrying the first control information, and the first shared channel is used for carrying the first data.

In this application, that the first control channel and the first shared channel overlap (overlapping) may be understood as follows: The first control channel and the first shared channel occupy completely or partially the same time-domain resource and/or frequency-domain resource. Alternatively, on the same time-domain resource and/or frequency-domain resource, transmission is performed simultaneously on the first control channel and the first shared channel. Alternatively, on the same time-domain resource and/or frequency-domain resource, the first control information is to be transmitted on the first control channel, and the first data is to be transmitted on the first shared channel, where a transmission conflict exists between the first control information and the first data.

In a second implementation, if the second data is on a second resource and a value of M sub-resources included in the second resource is greater than a first threshold, where M is a positive integer, the first communication device may multiplex the first control information and the first data to obtain the second data, where a first control channel is used for carrying the first control information.

In other words, if a total quantity of spread symbols is excessively small, that is, if M is less than or equal to the first threshold, a quantity of effective symbols that can be used for data transmission is small. In this case, if the first control information and the first data are still multiplexed, an increase in data transmission errors is caused.

Optionally, the first threshold is predefined, preconfigured, or configured via signaling. This is not limited in this application.

Optionally, the first threshold is related to a type of the first control information.

For example, if the first control information is acknowledgment (acknowledgment, ACK) or negative acknowledgment (negative acknowledgment) NACK, the first threshold may be a first value, for example, one symbol or two symbols. If the first control information is CSI, the first threshold may be a second value, for example, three symbols or four symbols.

Optionally, the second value is greater than or equal to the first value.

S920: The first communication device performs time-domain spreading and/or frequency-domain spreading on the second data by using a first sequence, to obtain third data that occupies a first resource.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device performs time-domain spreading and/or frequency-domain spreading on the second data by using the first sequence, to obtain the third data that occupies the first resource. In another example, a baseband chip (or a baseband part) or a processor of the network device performs time-domain spreading and/or frequency-domain spreading on the second data by using the first sequence, to obtain the third data that occupies the first resource.

For example, the second communication device is a terminal device, or a module (such as a circuit, a chip, or a chip system) in a terminal device, or a logical node, a logical module, or software that can implement all or some network functions.

For example, the terminal device performs time-domain spreading and/or frequency-domain spreading on the second data by using the first sequence, to obtain the third data that occupies the first resource. In another example, a baseband chip (or a baseband part) or a processor of the terminal device performs time-domain spreading and/or frequency-domain spreading on the second data by using the first sequence, to obtain the third data that occupies the first resource.

For example, the first sequence may include one or more elements (or code elements), and a value of each element may be +1 or -1. The first sequence herein may be the foregoing sequence #A. Assuming that a length of the sequence #A is N_{SF}, N_{SFt} represents N_{SFt}-fold spreading in time domain by using the first sequence, and N_{SFf} represents N_{SFf}-fold spreading in frequency domain by using the first sequence, where N_{SF}, N_{SFt}, and N_{SFf} are all integers greater than 1.

It should be understood that the third data is obtained through time-domain spreading and/or frequency-domain spreading on the second data. For a definition of spreading, refer to the foregoing related descriptions. For example, time-domain spreading may be slot spreading or symbol spreading, and the frequency-domain spreading includes one or more of the following: RE spreading or N-fold frequency-domain comb multiplexing, where N is a comb size of a frequency-domain resource occupied by the second data, and N is a positive integer.

In an implementation, the first communication device multiplies the second data by *N*₁ elements in the first sequence sequentially to obtain the third data, where the second data is on a second resource, the second resource includes M sub-resources, the second resource is included in the first resource, the third data occupies Mx*N*₁ sub-resources, the first resource includes the Mx*N*₁ sub-resources, and both M and *N*₁ are positive integers.

For example, the second resource may be a time-domain resource and/or a frequency-domain resource. In this application, the second resource is used for transmitting the second data, or each piece of second data is on the second resource. Data obtained through time-domain spreading and/or frequency-domain spreading on the second data is considered as the third data. In other words, the third data may be considered as including multiple pieces of second data.

Optionally, the first resource is a data symbol in a slot, and the data symbol includes no demodulation reference signal. In other words, the second data is not mapped onto a demodulation reference signal on the first resource.

In this application, the time-domain resource occupied by the data or the control information may include one or more slots, or some symbols in one slot, and the frequency-domain resource occupied by the data or the control information may include one or more REs, carriers, or the like. For example, spreading in time domain is used as an example. It is assumed that the second data occupies a symbol 1 and a symbol 2, that is, the M sub-resources may be two symbols. In this case, the second data that occupies the two symbols is multiplied sequentially by +1 and -1 to obtain third data. The third data occupies four symbols: the symbol 1, the symbol 2, a symbol 3, and a symbol 4. In other words, the *N*₁ elements in the first sequence may be +1 and -1 (N1 = 2), and the Mx*N*₁ sub-resources may be the four symbols, that is, the first resource includes the four symbols. Optionally, the first resource may further include another symbol for carrying a demodulation reference signal.

In another example, spreading in frequency domain is used as an example. It is assumed that the second data occupies RE1, RE2, and RE3, that is, the M sub-resources may be three REs. In this case, the second data that occupies the three REs is multiplied sequentially by +1, -1, +1, and -1 to obtain third data. The third data occupies 12 REs: RE1 to RE12. In other words, the *N*₁ elements in the first sequence may be +1, -1, +1, and -1 (*N*₁ = 4), and the Mx*N*₁ sub-resources may be the 12 REs, that is, the first resource includes the 12 REs. Optionally, the first resource may further include another part, for example, a guard band.

It should be noted that the time-domain spreading and the frequency-domain spreading may be implemented independently or may be implemented in combination. A specific implementation is not described in detail.

Optionally, a DFT-s-OFDM waveform is used for the second data and/or the third data. To be specific, before a modulation symbol of the second data is mapped onto the second resource, DFT needs to be performed; and/or before a modulation symbol of the third data is mapped onto the first resource, DFT needs to be performed.

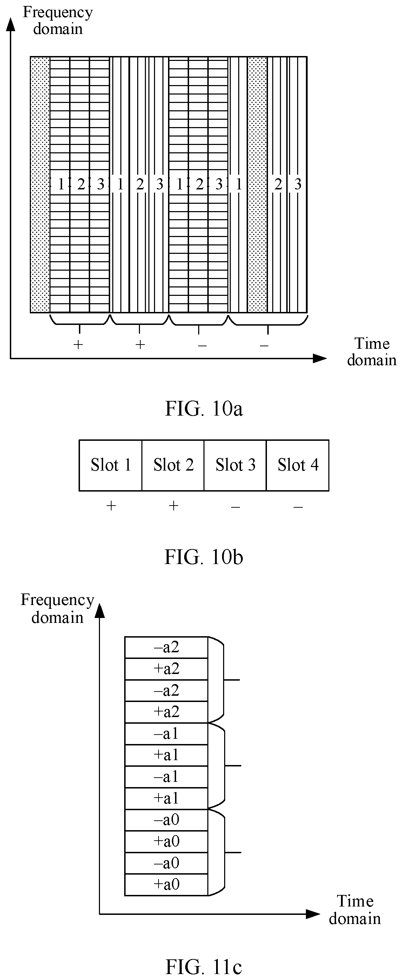

The following describes, with reference to FIG. 10a to FIG. 15, diagrams of time-domain spreading and/or frequency-domain spreading in embodiments of this application.

FIG. 10a to FIG. 13k are diagrams of time-domain spreading or frequency-domain spreading according to embodiments of this application.

FIG. 10a and FIG. 10b are diagrams of time-domain spreading. As shown in FIG. 10a, a horizontal axis represents time domain using symbols as an example, and a vertical axis represents frequency domain using REs as an example. For example, a TB is mapped onto three symbols in each slot, including a symbol 1, a symbol 2, and a symbol 3, and then symbol-level four-fold spreading is performed in time domain, where spreading elements may be +1, +1, -1, and -1, that is, N_{SFt} = 4, indicating that the TB may occupy 12 symbols after time-domain spreading. Optionally, time-domain resources obtained after time-domain spreading may further include a demodulation reference signal. As shown in FIG. 10b, a horizontal axis represents time domain using slots as an example. For example, a TB is mapped onto a slot, for example, a slot 1, and then slot-level four-fold spreading is performed in time domain, where spreading elements may be +1, +1, -1, and -1, that is, N_{SFt} = 4, indicating that after time-domain spreading, the TB may occupy four slots, including the slot 1, a slot 2, a slot 3, and a slot 4.

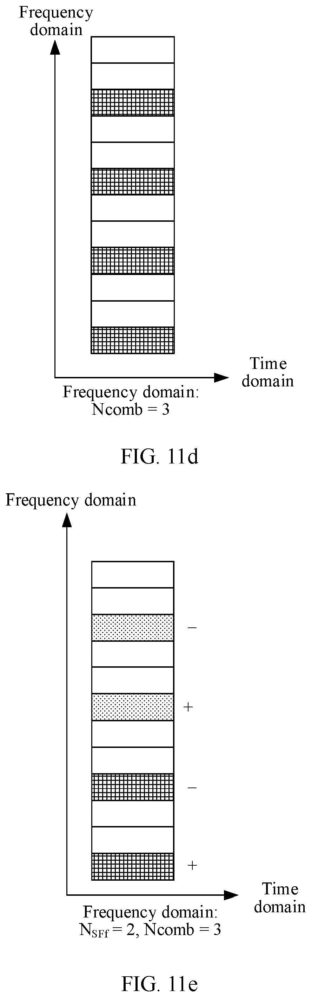

FIG. 11c to FIG. 11e are diagrams of frequency-domain spreading. As shown in FIG. 11c, a horizontal axis represents time domain using a symbol as an example, and a vertical axis represents frequency domain using REs as an example. For example, a TB is mapped onto four REs, and then RE-level four-fold spreading is performed in frequency domain, where spreading elements may be +1, -1, +1, and -1, that is, NSF_{f} = 4, indicating that after frequency-domain spreading, the TB may occupy 12 REs: +a0 -a0 +a0 -a0, +a1 -a1 +a1 -a1, and +a2 -a2 +a2 -a2. As shown in FIG. 11d, a horizontal axis represents time domain using a slot as an example, and a vertical axis represents frequency domain using REs as an example. Frequency-domain comb transmission is implemented, where Ncomb = 3, indicating that UE may perform transmission once every three REs. As shown in FIG. 11e, a horizontal axis represents time domain using a slot as an example, and a vertical axis represents frequency domain using REs as an example. For example, frequency-domain comb transmission and frequency-domain OCC transmission are implemented, where Ncomb = 3, indicating that UE may perform transmission once every three REs, and NSF_{f} = 2, indicating that two-fold spreading is performed in frequency domain, where spreading elements may be +1, -1, +1, and -1. It indicates that the TB may be transmitted once every three REs in 12 REs after frequency-domain comb and frequency-domain spreading.

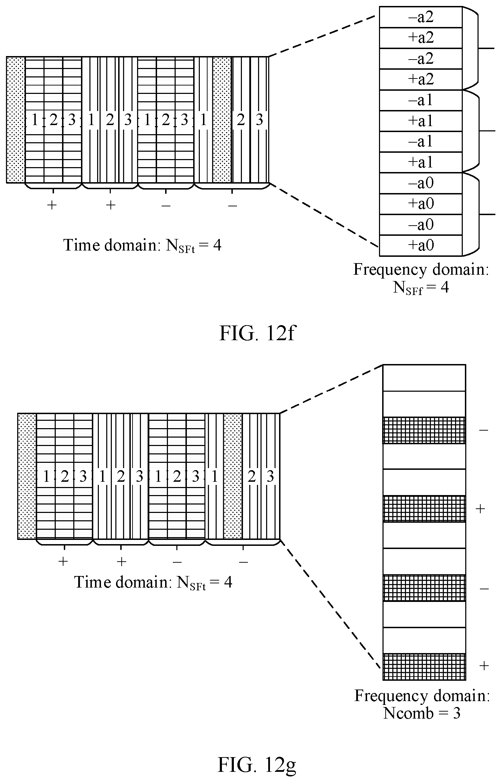

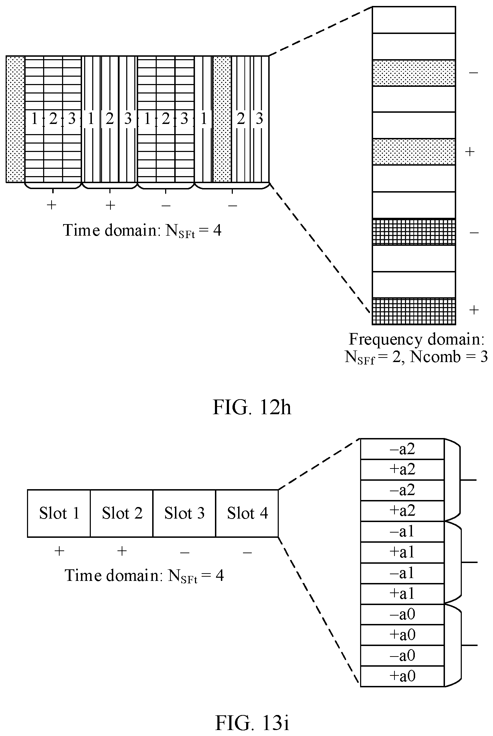

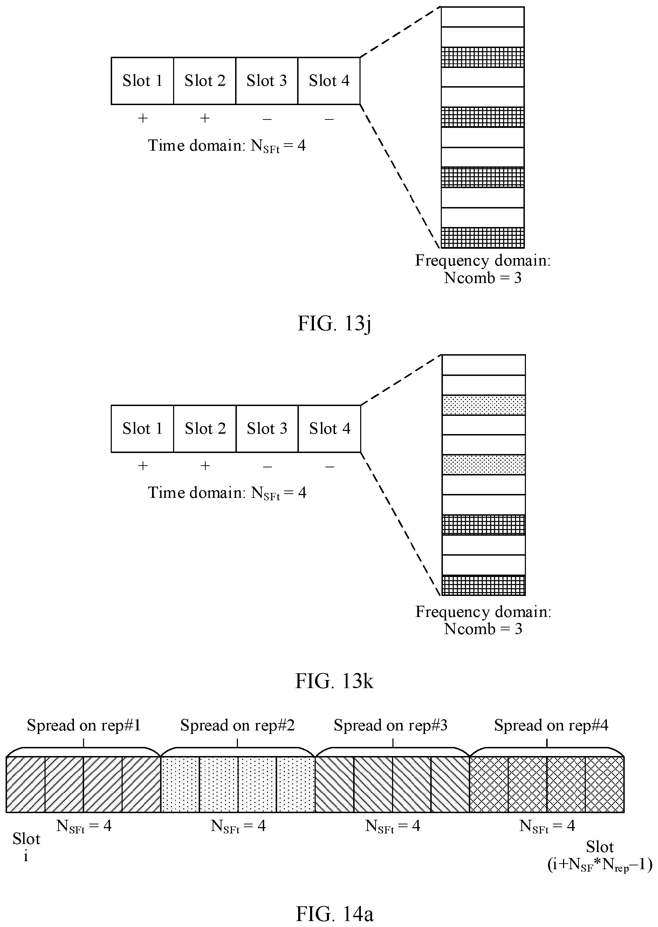

FIG. 12f to FIG. 12h and FIG. 13i to FIG. 13k are diagrams of time-domain spreading and frequency-domain spreading. As shown in FIG. 12f, four-fold spreading is performed in time domain, and four-fold spreading is performed in frequency domain, that is, N_{SFt} = 4 and NSF_{f} = 4. For specific descriptions, refer to the related descriptions of FIG. 10a and FIG. 11c. As shown in FIG. 12g, four-fold spreading is performed in time domain, and comb transmission is performed in frequency domain, that is, N_{SFt} = 4 and Ncomb = 3. For specific descriptions, refer to the related descriptions of FIG. 10a and FIG. 11d. As shown in FIG. 12h, four-fold spreading is performed in time domain, and comb transmission and then two-fold spreading are performed in frequency domain, that is, N_{SFt} = 4, NSF_{f} = 2, and Ncomb = 3. For specific descriptions, refer to the related descriptions of FIG. 10a and FIG. 11e. As shown in FIG. 13i, four-fold spreading is performed in time domain, and four-fold spreading is performed in frequency domain, that is, N_{SFt} = 4 and NSF_{f} = 4. For specific descriptions, refer to the related descriptions of FIG. 10b and FIG. 11c. As shown in FIG. 13j, four-fold spreading is performed in time domain, and comb transmission is performed in frequency domain, that is, N_{SFt} = 4 and Ncomb = 3. For specific descriptions, refer to the related descriptions of FIG. 10b and FIG. 11d. As shown in FIG. 13k, four-fold spreading is performed in time domain, and comb transmission and then two-fold spreading are performed in frequency domain, that is, N_{SFt} = 4, NSF_{f} = 2, and Ncomb = 3. For specific descriptions, refer to the related descriptions of FIG. 10b and FIG. 11e.

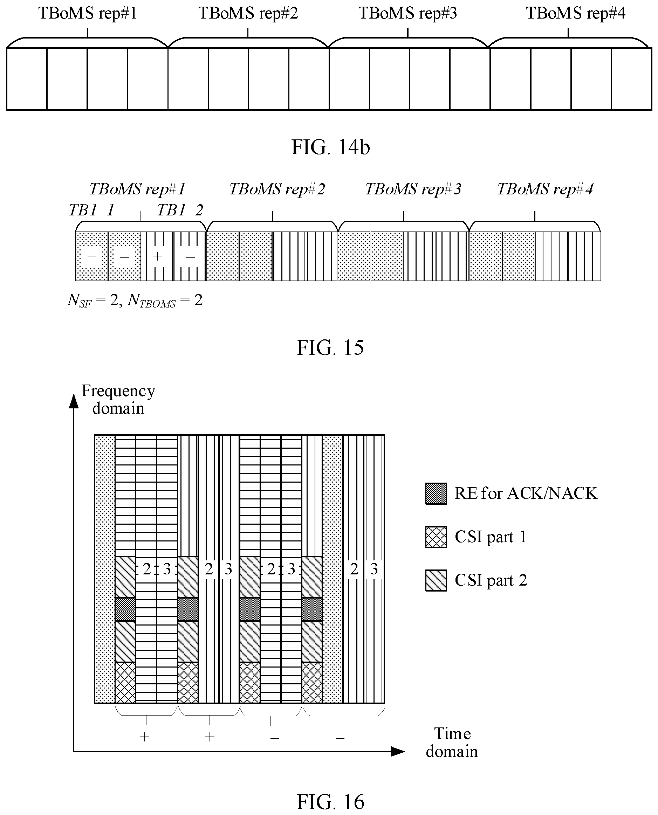

FIG. 14a and FIG. 14b are diagrams of repeated transmission according to an embodiment of this application. A horizontal axis represents time domain using slots as an example. As shown in FIG. 14a, there are four repetitions of transmission in time domain, N_{SF} = 4, and a time-domain resource for data includes 16 slots, that is, N = 16, and Nᵣₑₚ is 4, including spread on rep#1, spread on rep#2, spread on rep#3, and spread on rep#4 as shown in the figure. These repetitions may be repetitions after spreading over each slot, or may be repetitions after spreading over multiple slots. This is not limited in this application. It may be understood that one data packet may be transmitted once in one slot. Then, four-fold time-domain spreading is first performed on the data packet by using a sequence #A whose length is 4, to obtain data packets that occupy four slots, for the first repetition of transmission (for example, spread on rep#1), and so on. This results in four repetitions of transmission in time domain (for example, spread on rep#2, spread on rep#3, and spread on rep#4). It should be understood that each repetition of transmission occupies four slots, and each repetition of transmission may be considered as four-fold time-domain spreading on one slot.

As shown in FIG. 14b, one data packet may occupy four slots. For example, the data packet includes four parts (for example, TB1-1, TB1-2, TB1-3, and TB1-4), and each part occupies one slot. In other words, one data packet that occupies four slots may be referred to as a transport block over multiple slots (TB over multiple slots, TBoMS). These repetitions may be repetitions after spreading over each slot, or may be repetitions after spreading over multiple slots. This is not limited in this application. Then, transmission of the four parts may be considered as the first repetition of transmission (for example, TBoMS rep#1), and so on. This results in four repetitions of transmission in time domain (for example, TBoMS rep#2, TBoMS rep#3, and TBoMS rep#4). It should be understood that each repetition of transmission occupies four slots, and one data packet is transmitted in each repetition of transmission, to achieve coverage enhancement.

For the 11 implementations of time-domain spreading and/or frequency-domain spreading shown in FIG. 10a to FIG. 13k, with reference to the two implementations of repeated transmission shown in FIG. 14a and FIG. 14b, the first communication device described above may adopt the provided implementations when performing time-domain spreading and/or frequency-domain spreading on the second data, for example, there are 22 implementations of spreading and repetition in total, as shown in Table 1.

**Table 1**

| Scenario | Implementations of spreading and repetition | | |
|---|---|---|---|
| | Time-domain spreading (for example, refer to FIG. 10a and FIG. 10b) | Frequency-domain spreading (for example, refer to FIG. 11c to FIG. 11e) | Repetition (for example, refer to FIG. 14a and FIG. 14b) |
| 1 | Single-slot symbol spreading | No frequency division | No TBoMS |
| 2 | Multi-slot spreading | No frequency division | No TBoMS |
| 3 | No time-domain spreading | Frequency division | No TBoMS |
| 4 | No time-domain spreading | Comb multiplexing | No TBoMS |
| 5 | No time-domain spreading | Comb multiplexing + Frequency division | No TBoMS |
| 6 | Single-slot symbol spreading | Frequency division | No TBoMS |
| 7 | Single-slot symbol spreading | Comb multiplexing | No TBoMS |
| 8 | Single-slot symbol spreading | Comb multiplexing + Frequency division | No TBoMS |
| 9 | Multi-slot spreading | Frequency division | No TBoMS |
| 10 | Multi-slot spreading | Comb multiplexing | No TBoMS |
| 11 | Multi-slot spreading | Comb multiplexing + Frequency division | No TBoMS |
| 12 | Symbol-level spreading | No frequency division | With TBoMS |
| 13 | Slot-level spreading | No frequency division | With TBoMS |
| 14 | No time-domain spreading | Frequency division | With TBoMS |
| 15 | No time-domain spreading | Comb multiplexing | With TBoMS |
| 16 | No time-domain spreading | Comb multiplexing + Frequency division | With TBoMS |
| 17 | Single-slot symbol spreading | Frequency division | With TBoMS |
| 18 | Single-slot symbol spreading | Comb multiplexing | With TBoMS |
| 19 | Single-slot symbol spreading | Comb multiplexing + Frequency division | With TBoMS |
| 20 | Multi-slot spreading | Frequency division | With TBoMS |
| 21 | Multi-slot spreading | Comb multiplexing | With TBoMS |
| 22 | Multi-slot spreading | Comb multiplexing + Frequency division | With TBoMS |

It should be noted that FIG. 10a to FIG. 14b and Table 1 are merely examples provided for ease of understanding, and other schemes are not excluded. Optionally, a row in Table 1 is not limited in this application, or a quantity of rows in Table 1 is not limited in this application, for example, may be increased or decreased. For example, Table 1 may be split into multiple tables. For example, in Table 1, the scenarios 1, 3, 5, 7, ..., and 21 may separately form new tables, and the scenarios 2, 4, 6, 8, ..., and 22 may separately form new tables. Alternatively, Table 1 may be split into multiple other tables as examples. This is not limited in this application, and a splitting manner is not limited. FIG. 15 is a diagram of a combination of time-domain spreading and repeated transmission according to an embodiment of this application, corresponding to the scenario 12 or 13 in Table 1. As shown in FIG. 15, N_{SF} = 2, N_{TBoMS} = 2, and a data packet may occupy four slots. For example, the data packet includes two parts (for example, TB1-1 and TB1-2), and each part occupies two slots, that is, one data packet occupies four slots. Then, transmission of the two parts may be considered as the first repetition of transmission (for example, TBoMS rep#1), and so on. This results in four repetitions of transmission in time domain (for example, TBoMS rep#2, TBoMS rep#3, and TBoMS rep#4). It should be understood that each repetition of transmission occupies four slots, to achieve coverage enhancement.

S930: The first communication device transmits the third data to the second communication device on the first resource via a first shared channel.

Correspondingly, the second communication device receives the third data from the first communication device on the first resource via the first shared channel.

For example, the first shared channel may be used for carrying shared information on any link, for example, includes but is not limited to any one of the following: a physical uplink shared channel, a physical downlink shared channel, or a physical sidelink shared channel.

For example, the first control information may be control information on any link, for example, includes but is not limited to any one of the following: uplink control information, downlink control information, or sidelink control information.

To be specific, the second data obtained after the first control information and the first data are multiplexed is transmitted to the second communication device via the first shared channel on the first resource after time-domain spreading and/or frequency-domain spreading. In other words, the first control information is multiplexed onto the first shared channel for transmitting.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device; and the second communication device is a terminal device, or a module (such as a circuit, a chip, or a chip system) in a terminal device, or a logical node, a logical module, or software that can implement all or some network functions. For example, the network device transmits the third data to the terminal device on the first resource via the first shared channel. In another example, a baseband chip (or a baseband part) or a processor of the network device generates the third data, and then transmits the third data to a radio frequency unit (or a radio frequency part) of the network device. The radio frequency unit (or the radio frequency part) of the network device transmits the third data to a radio frequency unit (or a radio frequency part) of the terminal device on the first resource via the first shared channel. Then, the radio frequency unit (or the radio frequency part) of the terminal device transmits the third data to the radio frequency unit (or the radio frequency part) of the terminal device.

Optionally, the "transmitting" may be described as "outputting".

S940: The second communication device performs time-domain despreading and/or frequency-domain despreading on the third data by using the first sequence, to obtain the second data.

It should be understood that, despreading is a process of parsing and demodulating, by using a spreading sequence, spread data or information received by a receiver side. Optionally, in a despreading manner, spread data or information is multiplied by conjugates of corresponding code elements in a spreading sequence, and then multiplication results are accumulated.

In an implementation, the second communication device multiplies the received third data by conjugates of the *N*₁ elements in the first sequence sequentially, to obtain *N*₁ pieces of the second data.

For example, the second communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device performs time-domain despreading and/or frequency-domain despreading on the third data by using the first sequence, to obtain the second data. In another example, a baseband chip (or a baseband part) or a processor of the network device performs time-domain despreading and/or frequency-domain despreading on the third data by using the first sequence, to obtain the second data.

For example, the second communication device is a terminal device, or a module (such as a circuit, a chip, or a chip system) in a terminal device, or a logical node, a logical module, or software that can implement all or some network functions.

For example, the terminal device performs time-domain despreading and/or frequency-domain despreading on the third data by using the first sequence, to obtain the second data. In another example, a baseband chip (or a baseband part) or a processor of the terminal device performs time-domain despreading and/or frequency-domain despreading on the third data by using the first sequence, to obtain the second data.

S950: The second communication device demultiplexes the second data to obtain the first control information and the first data.

It should be understood that, demultiplexing is a process of parsing, according to a process of arranging control information and data, the control information transmitted together with the data. Herein, that the second data is demultiplexed to obtain the first control information and the first data may be understood as follows: The second data may be considered as a combination obtained after the first control information and the first data are multiplexed.

For example, the second communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device demultiplexes the second data to obtain the first control information and the first data. In another example, a baseband chip (or a baseband part) or a processor of the network device demultiplexes the second data to obtain the first control information and the first data.

For example, the second communication device is a terminal device, or a module (such as a circuit, a chip, or a chip system) in a terminal device, or a logical node, a logical module, or software that can implement all or some network functions.

For example, the terminal device demultiplexes the second data to obtain the first control information and the first data. In another example, a baseband chip (or a baseband part) or a processor of the terminal device demultiplexes the second data to obtain the first control information and the first data.

FIG. 16 is a diagram of a structure of multiplexing UCI onto a PUSCH before time-domain spreading according to an embodiment of this application. As shown in FIG. 16, a horizontal axis represents time domain using slots as an example. The UCI is multiplexed onto the PUSCH according to the method shown in FIG. 6. Then, four-fold spreading may be performed on the PUSCH in time domain, and the PUSCH obtained after time-domain spreading is transmitted. A spreading sequence may be +1 +1 -1 -1, or spreading elements/spreading code elements in the spreading sequence are sequentially +1, +1, -1, and -1. Correspondingly, a receive end receives the PUSCH and performs despreading to obtain the UCI and data. This implementation can improve transmission performance.

Based on the foregoing solution, when the first control channel and the first shared channel overlap in time domain, the first control information may be multiplexed onto the first shared channel. To be specific, when the first control channel and the first shared channel overlap in a single time-domain unit, the first control information on the time-domain unit of the first control channel is multiplexed onto the first shared channel in the time-domain unit. This means that the first control information and the first data are used as a whole. The first control information is first mapped onto the time-domain unit for the first data to obtain a UL-SCH, and then spreading is performed by a corresponding factor to map the spread UL-SCH onto the first resource for transmitting, so as to avoid despreading errors and improve transmission performance.

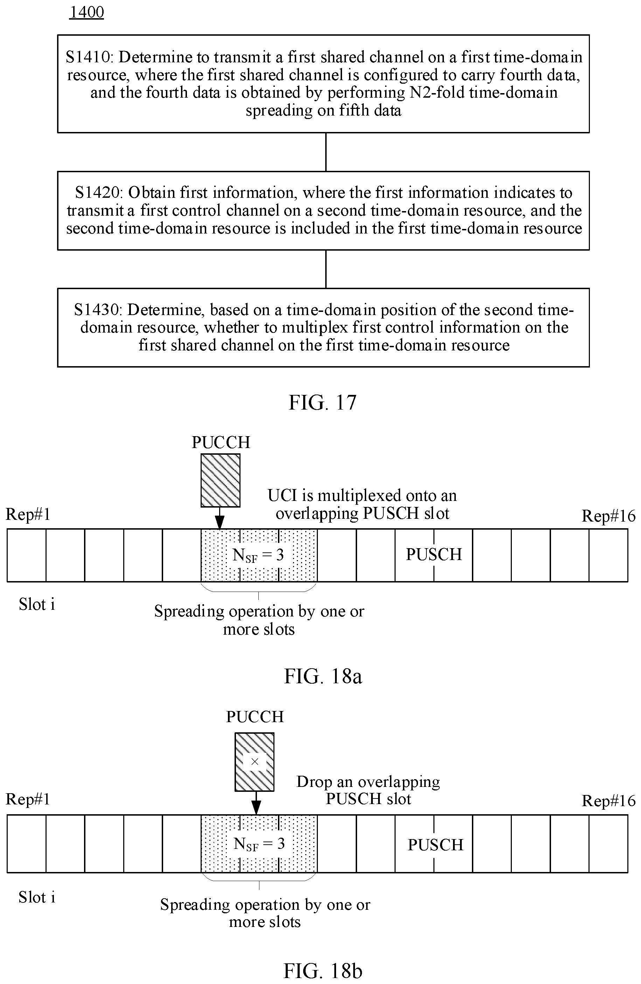

FIG. 17 is a schematic flowchart of a communication method 1400 according to an embodiment of this application. As shown in FIG. 17, the method includes the following plurality of steps.

S1410: A first communication device determines to transmit a first shared channel on a first time-domain resource.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device determines to transmit the first shared channel on the first time-domain resource. In another example, a baseband chip (or a baseband part) or a processor of the network device determines to transmit the first shared channel on the first time-domain resource. For example, the second communication device is a terminal device, or a module (such as a circuit, a chip, or a chip system) in a terminal device, or a logical node, a logical module, or software that can implement all or some network functions.

For example, the terminal device determines to transmit the first shared channel on the first time-domain resource. In another example, a baseband chip (or a baseband part) or a processor of the terminal device determines to transmit the first shared channel on the first time-domain resource. Optionally, the "transmitting" may be described as "outputting".

The first shared channel is used for carrying fourth data, the fourth data is obtained by performing *N*₂-fold time-domain spreading on fifth data, and *N*₂ is a positive integer.

For example, the first time-domain resource may be a slot or a symbol. A size of the first time-domain resource is not limited in this application. It should be understood that, that the fourth data is obtained by performing *N*₂-fold time-domain spreading on the fifth data may be understood as: in time domain, the fifth data is multiplied sequentially by *N*₂ elements in a specific sequence to obtain the fourth data. In other words, a size of a resource occupied by the fourth data may be considered as *N*₂ times a size of a resource occupied by the fifth data.

In an implementation, that the fourth data is obtained by performing the *N*₂-fold time-domain spreading on the fifth data includes: The first communication device maps the fifth data onto the third time-domain resource, where the third time-domain resource includes K time-domain sub-resources, the third time-domain resource is included in the first time-domain resource, and K is a positive integer; and multiplies the fifth data by *N*₂ elements in a second sequence sequentially to obtain the fourth data, where the fourth data occupies Kx*N*₂ sub-resources, and the first time-domain resource includes the Kx*N*₂ sub-resources. For a specific example, refer to the related descriptions of the method 900.

For descriptions of the first shared channel, time-domain spreading, and the like, refer to the related descriptions of the method 900. Details are not described herein again.

Optionally, the fourth data is obtained by performing *N*₃-fold frequency-domain spreading on the fifth data, and *N*₃ is a positive integer. For example, the frequency-domain spreading includes one or more of the following: RE spreading or N-fold frequency-domain comb multiplexing, where N is a comb size of a frequency-domain resource occupied by the fifth data, and N is a positive integer.

S1420: The first communication device obtains first information.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device obtains the first information. In another example, a baseband chip (or a baseband part) or a processor of the network device obtains the first information.

For example, the second communication device is a terminal device, or a module (such as a circuit, a chip, or a chip system) in a terminal device, or a logical node, a logical module, or software that can implement all or some network functions.

For example, the terminal device obtains the first information. In another example, a baseband chip (or a baseband part) or a processor of the terminal device obtains the first information.

The first information indicates to transmit a first control channel on a second time-domain resource, the second time-domain resource is included in the first time-domain resource, and the first control channel is used for carrying first control information.

For example, the first control information may be control information on any link, for example, includes but is not limited to any one of the following: uplink control information, downlink control information, or sidelink control information.

For example, the first shared channel may be used for carrying shared information on any link, for example, includes but is not limited to any one of the following: a physical uplink shared channel, a physical downlink shared channel, or a physical sidelink shared channel.

For example, the first information may be indicated by signaling. For example, the first communication device receives the first information on the third time-domain resource. Optionally, the third time-domain resource may precede the second time-domain resource. In other words, the first communication device learns in advance that the first control information is to be transmitted on the second time-domain resource.

In another example, the first information may be predefined or preconfigured. The predefinition may include definition in advance, for example, definition in a protocol. The preconfiguration may be implemented by pre-storing corresponding code, tables, functions, text, or character strings in the first communication device, or in another manner of indicating the first information. A specific implementation thereof is not limited in this application.

In an implementation, that the first information indicates to transmit the first control channel on the second time-domain resource includes: The first information directly indicates a position of the second time-domain resource, or the first information indirectly indicates a position of the second time-domain resource. For example, the first information indicates a start position and/or an end position of the second time-domain resource, or indicates a start position and a length of the second time-domain resource, or indicates an offset value between the second time-domain resource and the time-domain resource for the first information. In another example, the first information indicates a transmitting or receiving moment of service data, and the second time-domain resource includes a start time-domain position and/or an end time-domain position of the service data. For example, the first information is DCI, the DCI indicates a time-domain resource position at which the first communication device receives a PDSCH, an end position of the PDSCH in time domain is the position of the second time-domain resource. Optionally, after receiving the PDSCH, the first communication device determines acknowledgment information (that is, an example of the first control information) of hybrid automatic repeat request-acknowledgment (hybrid automatic repeat request-acknowledgment, HARQ-ACK) generated for the PDSCH.

S1430: The first communication device determines, based on a time-domain position of the second time-domain resource, whether to multiplex the first control information on the first shared channel on the first time-domain resource.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device determines, based on the time-domain position of the second time-domain resource, whether to multiplex the first control information on the first shared channel on the first time-domain resource. In another example, a baseband chip (or a baseband part) or a processor of the network device determines, based on the time-domain position of the second time-domain resource, whether to multiplex the first control information on the first shared channel on the first time-domain resource.

For example, the second communication device is a terminal device, or a module (such as a circuit, a chip, or a chip system) in a terminal device, or a logical node, a logical module, or software that can implement all or some network functions.

For example, the terminal device determines, based on the time-domain position of the second time-domain resource, whether to multiplex the first control information on the first shared channel on the first time-domain resource. In another example, a baseband chip (or a baseband part) or a processor of the terminal device determines, based on the time-domain position of the second time-domain resource, whether to multiplex the first control information on the first shared channel on the first time-domain resource.

For example, the time-domain position of the second time-domain resource herein may be understood as a position of the second time-domain resource in the first time-domain resource, or a position relationship between the second time-domain resource and the third time-domain resource (a time interval between the second time-domain resource and the third time-domain resource), or actual transmission time of the first control channel.

Optionally, the interval between the second time-domain resource and the third time-domain resource may be an interval between an end position of the second time-domain resource and a start position of the third time-domain resource; or may be an interval between a start position of the second time-domain resource and a start position of the third time-domain resource; or may be an interval between an end position of the second time-domain resource and a start position of the third time-domain resource; or may be an interval between an end position of the second time-domain resource and an end position of the third time-domain resource. This is not limited in this application.

In an implementation, when an interval between the second time-domain resource and the third time-domain resource is greater than or equal to a first threshold, it is determined that the first control information is multiplexed on the first shared channel on the first time-domain resource. In an implementation, when the interval between the second time-domain resource and the third time-domain resource is less than the first threshold, it is determined that the first control information is not multiplexed on the first shared channel on the first time-domain resource.

For example, the first threshold is related to a processing capability of the first communication device.

Optionally, a stronger processing capability of the first communication device indicates a smaller first threshold; and conversely, a weaker processing capability of the first communication device indicates a larger first threshold.

For example, the first time-domain resource or the second time-domain resource or the third time-domain resource may be a slot or a symbol.

Based on the foregoing implementation, the first communication device determines, based on the time interval between the third time-domain resource on which the first information is received and the second time-domain resource on which the first control channel is transmitted, whether to multiplex the first control information on the first shared channel on the first time-domain resource. For example, after the first communication device receives the first information on the third time-domain resource and before the first communication device transmits the first control channel on the second time-domain resource, if the time interval between the third time-domain resource and the second time-domain resource is long enough, the first communication device may multiplex the first control information on the first shared channel on the first time-domain resource. Conversely, if the time interval between the third time-domain resource and the second time-domain resource is not long enough, which means that the first communication device cannot process the first control channel in time, the first communication device may not multiplex the first control information on the first shared channel on the first time-domain resource, and may transmit only the first data on the first shared channel on the first time-domain resource, to ensure uninterrupted data transmission. Optionally, the first communication device drops the first control channel.

In an implementation, when a time-domain resource in which the second time-domain resource and the first time-domain resource overlap is a time-domain resource that is the first one in the first time-domain resource, it is determined that the first control information is multiplexed on the first shared channel on the first time-domain resource.

In an implementation, when a time-domain resource in which the second time-domain resource and the first time-domain resource overlap is a time-domain resource that is not the first one in the first time-domain resource, it is determined that the first control information is not multiplexed on the first shared channel on the first time-domain resource.

Based on the foregoing implementation, based on the position of the second time-domain resource, on which the first control channel is transmitted, in the first time-domain resource, the first communication device determines whether to multiplex the first control information on the first shared channel on the first time-domain resource. For example, if the second time-domain resource is a time-domain resource that is the first one in the third time-domain resource, the first communication device may multiplex the first control information on the first shared channel on the first time-domain resource. Conversely, if the second time-domain resource is not a time-domain resource that is the first one in the third time-domain resource, which means that the first data is currently being transmitted on a time-domain resource that is the first one in the first time-domain resource, and the first communication device cannot multiplex the first control information in time, the first communication device transmits only the first data on the first shared channel on the first time-domain resource, to ensure uninterrupted data transmission. Optionally, the first communication device drops the first control channel.

In an implementation, when a time-domain resource in which the second time-domain resource and the first time-domain resource overlap is a time-domain resource that is not the first one in the first time-domain resource, it is determined that the first control information is multiplexed on the first shared channel starting from the time-domain resource that is the first one in the first time-domain resource.

Optionally, the first control information is multiplexed on all first shared channels on the first time-domain resource.

In other words, when it is determined that the first data and the first control information are multiplexed, the first data and the first control information are multiplexed on the first shared channel on an initial time-domain unit in the first time-domain resource. In this way, after receiving a signal, a receive end can correctly perform despreading without decoding errors, ensuring data transmission performance to the maximum extent. For example, the first time-domain resource includes three symbols: a symbol 0 to a symbol 2, and the first shared channel occupies the first time-domain resource. If the second time-domain resource is on the symbol 2, when determining to multiplex the first control information and the first data, the first communication device may multiplex the first control information and the first shared channel on the first shared channel on the symbol 0. Optionally, the first control information may be multiplexed on the first shared channel on the symbol 0 to the symbol 2.

FIG. 18a and FIG. 18b are diagrams of a UCI mapping method when a PUCCH and a spread PUSCH overlap in time domain. As shown in FIG. 18a and FIG. 18b, a single PUCCH overlaps in time domain a PUSCH on which three-fold time-domain spreading is performed (for example, N_{SFt} = 3, indicating that three times of slot-level spreading is performed on the PUSCH). As shown in FIG. 18a, when the PUCCH appears in the first slot of the PUSCH OCC (time-domain spreading), UE may multiplex the UCI onto each slot of the spread PUSCH. In other words, the UE may repeatedly transmit the UCI on the spread PUSCH. This is because the first communication device has not transmitted the PUSCH due to the overlap on the first slot. Therefore, there is sufficient time to multiplex the UCI. As shown in FIG. 18b, when the PUCCH appears in a slot that is not the first one of the PUSCH OCC (time-domain spreading), UE may not multiplex the UCI onto the PUSCH. In other words, the UE transmits the first data on all slots of the spread PUSCH. Optionally, the UE may drop the PUCCH, that is, the UE does not transmit the UCI. This is because the PUSCH has been transmitted without multiplexing in the slot that is not the first one. Even if there follows an overlap, no modifications should be made. Otherwise, data transmitted on the PUSCH of a spreading time length varies, and consequently, a receiver cannot correctly perform despreading.

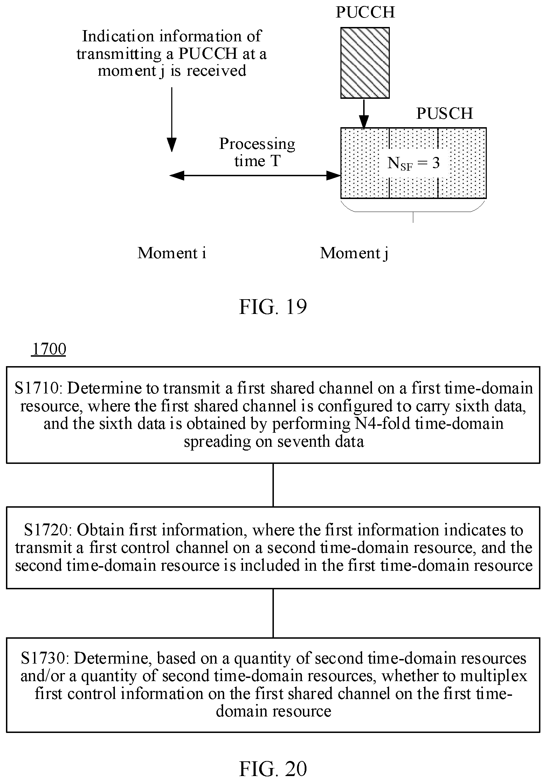

FIG. 19 is a diagram of a conflict between a PUCCH and a PUSCH OCC (spread) on an initial slot. As shown in FIG. 19, UE starts to prepare to-be-transmitted data on a PUSCH at a moment i, which requires specific processing time T. In other words, the UE transmits the PUSCH at a moment j (that is, the second time-domain resource). In addition, the UE further receives the first information at the moment i (that is, the third time-domain resource). The first information indicates to transmit to-be-transmitted UCI on a PUCCH at the moment j. The moment j is after the moment i. In this case, the PUCCH and the PUSCH conflict at the moment j. Therefore, the UE may multiplex the UCI at the moment i instead of waiting until the moment j to multiplex the UCI. In this way, a processing delay can be reduced. In this implementation, whether to multiplex the UCI onto the PUSCH or drop the UCI is determined based on a relative position of the UCI in multiple PUSCH slots. This can avoid despreading errors caused by multiplexing the UCI on the inappropriate PUSCH, and therefore can avoid reduction of transmission performance.

Optionally, the method further includes the following step S1401.

S1401: The first communication device transmits the first shared channel to the second communication device on the first time-domain resource.

Correspondingly, the second communication device receives the first shared channel from the first communication device on the first time-domain resource.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device. The second communication device is a terminal device, or a module (such as a circuit, a chip, or a chip system) in a terminal device, or a logical node, a logical module, or software that can implement all or some network functions. For example, the network device transmits the first shared channel to the second communication device on the first time-domain resource. In another example, a baseband chip (or a baseband part) or a processor of the network device determines the first shared channel, and then transmits the first shared channel to a radio frequency unit (or a radio frequency part) of the network device. The radio frequency unit (or the radio frequency part) of the network device transmits the first shared channel to a radio frequency unit (or a radio frequency part) of the terminal device. Then, the radio frequency unit (or the radio frequency part) of the terminal device transmits the first shared channel to the radio frequency unit (or the radio frequency part) of the terminal device.

Optionally, if the first communication device determines to multiplex the first control information on the first shared channel on the first time-domain resource in step S1430, after receiving the first shared channel, the second communication device needs to perform demultiplexing to obtain the first control information. For details, refer to the following step S1402.

S1402: The second communication device determines, based on the time-domain position of the second time-domain resource, to perform demultiplexing on the first shared channel to obtain the first control information.

For example, the second communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device determines, based on the time-domain position of the second time-domain resource, to perform demultiplexing on the first shared channel to obtain the first control information. In another example, a baseband chip (or a baseband part) or a processor of the network device determines, based on the time-domain position of the second time-domain resource, to perform demultiplexing on the first shared channel to obtain the first control information.

For example, the second communication device is a terminal device, or a module (such as a circuit, a chip, or a chip system) in a terminal device, or a logical node, a logical module, or software that can implement all or some network functions.

For example, the terminal device determines, based on the time-domain position of the second time-domain resource, to perform demultiplexing on the first shared channel to obtain the first control information. In another example, a baseband chip (or a baseband part) or a processor of the terminal device determines, based on the time-domain position of the second time-domain resource, to perform demultiplexing on the first shared channel to obtain the first control information.

For specific implementations of demultiplexing and despreading, refer to the related descriptions of the method 900. Details are not described herein again.

Optionally, if the first communication device determines not to multiplex the first control information on the first shared channel on the first time-domain resource in step S1430, after receiving the first shared channel, the second communication device performs demapping to obtain fourth data and performs despreading to obtain sixth data. For details, refer to the following steps S1403 and S1404.

S1403: The second communication device performs demapping on the first shared channel to obtain the fourth data.

S1404: The second communication device performs *N*₂-fold time-domain despreading on the fourth data to obtain fifth data.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device performs demapping on the first shared channel to obtain the fourth data, and performs *N*₂-fold time-domain despreading on the fourth data to obtain the fifth data. In another example, a baseband chip (or a baseband part) or a processor of the network device performs demapping on the first shared channel to obtain the fourth data, and performs *N*₂-fold time-domain despreading on the fourth data to obtain the fifth data.

For example, the second communication device is a terminal device, or a module (such as a circuit, a chip, or a chip system) in a terminal device, or a logical node, a logical module, or software that can implement all or some network functions.

For example, the terminal device performs demapping on the first shared channel to obtain the fourth data, and performs *N*₂-fold time-domain despreading on the fourth data to obtain the fifth data. In another example, a baseband chip (or a baseband part) or a processor of the terminal device performs demapping on the first shared channel to obtain the fourth data, and performs *N*₂-fold time-domain despreading on the fourth data to obtain the fifth data.

For specific implementations of demapping and despreading, refer to the related descriptions in the conventional technology or the method 900. Details are not described herein again.

Based on the foregoing solution, the first communication device determines, based on the time-domain position of the second time-domain resource, whether to multiplex the first control information on the first shared channel on the first time-domain resource. This can avoid despreading errors caused by multiplexing the first control information on the first shared channel that is inappropriate, and therefore can avoid reduction of transmission performance.

FIG. 20 is a schematic flowchart of a communication method 1700 according to an embodiment of this application. As shown in FIG. 20, the method includes the following plurality of steps. S1710: A first communication device determines to transmit a first shared channel on a first time-domain resource.

Optionally, the term "transmitting" in this application may be described as "outputting".

The first shared channel is used for carrying sixth data, the sixth data is obtained by performing *N*₄-fold time-domain spreading on seventh data, and *N*₄ is a positive integer.

For example, that the sixth data is obtained by performing the *N*₄-fold time-domain spreading on the seventh data includes: The first communication device maps the seventh data onto a fourth time-domain resource, where the fourth time-domain resource includes L time-domain sub-resources, the fourth time-domain resource is included in the first time-domain resource, and L is a positive integer; and the first communication device multiplies the seventh data by *N*₄ elements in a third sequence sequentially to obtain the sixth data, where the sixth data occupies Lx*N*₄ sub-resources, and the first time-domain resource includes the Lx*N*₄ sub-resources.

Optionally, the sixth data is obtained by performing *N*₅-fold frequency-domain spreading on the seventh data, and *N*₅ is a positive integer. For example, the frequency-domain spreading includes one or more of the following: RE spreading or S-fold frequency-domain comb multiplexing, where S is a comb size of a frequency-domain resource occupied by the seventh data, and S is a positive integer.

S1720: The first communication device obtains first information.

The first information indicates to transmit a first control channel on a second time-domain resource, the second time-domain resource is included in the first time-domain resource, and the first control channel is used for carrying first control information.

For specific implementations of steps S1710 and S1720, refer to the related descriptions of steps S1410 and S1420 in the method 1400. Details are not described herein again.

S1730: The first communication device determines, based on a quantity of first time-domain resources and/or a quantity of second time-domain resources, whether to multiplex the first control information on the first shared channel on the first time-domain resource.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device determines, based on the quantity of the first time-domain resources and/or the quantity of the second time-domain resources, whether to multiplex the first control information on the first shared channel on the first time-domain resource. In another example, a baseband chip (or a baseband part) or a processor of the network device determines, based on the quantity of the first time-domain resources and/or the quantity of the second time-domain resources, whether to multiplex the first control information on the first shared channel on the first time-domain resource.

For example, the second communication device is a terminal device, or a module (such as a circuit, a chip, or a chip system) in a terminal device, or a logical node, a logical module, or software that can implement all or some network functions.

For example, the terminal device determines, based on the quantity of the first time-domain resources and/or the quantity of the second time-domain resources, whether to multiplex the first control information on the first shared channel on the first time-domain resource. In another example, a baseband chip (or a baseband part) or a processor of the terminal device determines, based on the quantity of the first time-domain resources and/or the quantity of the second time-domain resources, whether to multiplex the first control information on the first shared channel on the first time-domain resource.

In an implementation, the quantity of the second time-domain resources is P, the quantity of the first time-domain resources is Q, and both P and Q are positive integers; and when Q is less than or equal to P, it is determined that the first control information is not multiplexed on the first shared channel on the Q first time-domain resources, or it is determined that the first shared channel on the Q first time-domain resources is not transmitted.

In other words, if the quantity of the second time-domain resources is greater than or equal to the quantity of the first time-domain resources, or if a quantity of time-domain resources occupied by the first control channel is greater than a quantity of time-domain resources occupied by a first resource, the first communication device may not multiplex the first control information on the first shared channel on the first time-domain resource, or may drop or not transmit the first shared channel.

In an implementation, the quantity of the second time-domain resources is P, the quantity of the first time-domain resources is Q, and both P and Q are positive integers; and the first control information is multiplexed on the first shared channel on a fifth time-domain resource when P is less than Q.

The fifth time-domain resource is a time-domain resource that is the first one in an overlapping part between the first time-domain resource and the second time-domain resource; or the fifth time-domain resource is a time-domain resource that is the first one in the first time-domain resource; or the fifth time-domain resource is a time-domain resource that is the first one in the second time-domain resource.

In other words, if the quantity of the second time-domain resources is less than or equal to the quantity of the first time-domain resources, or if a quantity of time-domain resources occupied by the first control channel is less than a quantity of time-domain resources occupied by a first resource, the first communication device may multiplex the first control information on the first shared channel on the first time-domain resource.

In an implementation, the quantity of the second time-domain resources is P, the quantity of the first time-domain resources is Q, and both P and Q are positive integers; and when P is less than Q, it is determined that second control information is multiplexed on the first shared channel on the Q first time-domain resources, where a second control channel is used for carrying the second control information, and the second control channel is a control channel that is the first one in the first control channel.

In other words, if the quantity of the second time-domain resources is less than or equal to the quantity of the first time-domain resources, or if a quantity of time-domain resources occupied by the first control channel is less than a quantity of time-domain resources occupied by a first resource, the first communication device may multiplex control information that is the first one in multiple pieces of control information on the first shared channel on the first time-domain resource, and may drop or not multiplex the other control information.

In an implementation, the quantity of the second time-domain resources is P, the quantity of the first time-domain resources is Q, and both P and Q are positive integers; and when P is less than Q, it is determined that a third control channel is not transmitted, where a control channel other than the second control channel in the first control channel is the third control channel, and the second control channel is a control channel that is the first one in the first control channel.

In other words, if the quantity of the second time-domain resources is less than or equal to the quantity of the first time-domain resources, or if a quantity of time-domain resources occupied by the first control channel is less than a quantity of time-domain resources occupied by a first resource, the first communication device may not transmit or may drop a control information other than control information that is the first one on the first shared channel on the first time-domain resource.

In an implementation, the quantity of the second time-domain resources is P, the quantity of the first time-domain resources is Q, and both P and Q are positive integers; and when P is less than Q, it is determined that the first control information is not multiplexed on the first shared channel on the Q first time-domain resources.

In other words, if the quantity of the second time-domain resources is less than or equal to the quantity of the first time-domain resources, or if a quantity of time-domain resources occupied by the first control channel is less than a quantity of time-domain resources occupied by a first resource, the first communication device may not multiplex the first control information on the first shared channel on the first time-domain resource. For example, the first communication device may drop the first control channel, that is, may not transmit the first control information.

Optionally, the method further includes the following step S1701.

S1701: The first communication device transmits the first shared channel to the second communication device on the first time-domain resource.

Correspondingly, the second communication device receives the first shared channel from the first communication device on the first time-domain resource.

For a specific implementation, refer to the related descriptions of step S1401 in the method 1400. Optionally, if the first communication device determines to multiplex the first control information on the first shared channel on the first time-domain resource in step S1730, after receiving the first shared channel, the second communication device needs to perform demultiplexing to obtain the first control information. For details, refer to the following step S1702.

S1702: The second communication device determines, based on the quantity of the first time-domain resources and/or the quantity of the second time-domain resources, to perform demultiplexing on the first shared channel to obtain the first control information.

For example, the second communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device determines, based on the quantity of the first time-domain resources and/or the quantity of the second time-domain resources, to perform demultiplexing on the first shared channel to obtain the first control information. In another example, a baseband chip (or a baseband part) or a processor of the network device determines, based on the quantity of the first time-domain resources and/or the quantity of the second time-domain resources, to perform demultiplexing on the first shared channel to obtain the first control information.

For example, the second communication device is a terminal device, or a module (such as a circuit, a chip, or a chip system) in a terminal device, or a logical node, a logical module, or software that can implement all or some network functions.

For example, the terminal device determines, based on the quantity of the first time-domain resources and/or the quantity of the second time-domain resources, to perform demultiplexing on the first shared channel to obtain the first control information. In another example, a baseband chip (or a baseband part) or a processor of the terminal device determines, based on the quantity of the first time-domain resources and/or the quantity of the second time-domain resources, to perform demultiplexing on the first shared channel to obtain the first control information.

For specific implementations of demultiplexing and despreading, refer to the related descriptions of steps S1403 and S1404 in the method 1400. Details are not described herein again.

Optionally, if the first communication device determines not to multiplex the first control information on the first shared channel on the first time-domain resource in step S1730, after receiving the first shared channel, the second communication device performs demapping to obtain sixth data and performs despreading to obtain seventh data. For details, refer to the following steps S1703 and S1704.

S1703: The second communication device performs demapping on the first shared channel to obtain the sixth data.

S1704: The second communication device performs *N*₄-fold time-domain despreading on the sixth data to obtain the seventh data.

For example, the first communication device is a network device, or a module (such as a circuit, a chip, or a chip system) in a network device, or a CU or DU of a network device, or a logical node, a logical module, or software that can implement all or some network functions, for example, may be a base station, a core network device, or a relay device.

For example, the network device performs demapping on the first shared channel to obtain the sixth data, and performs *N*₄-fold time-domain despreading on the sixth data to obtain the seventh data. In another example, a baseband chip (or a baseband part) or a processor of the network device performs demapping on the first shared channel to obtain the fourth data, and performs *N*₄-fold time-domain despreading on the sixth data to obtain the seventh data.

For example, the second communication device is a terminal device, or a module (such as a circuit, a chip, or a chip system) in a terminal device, or a logical node, a logical module, or software that can implement all or some network functions.

For example, the terminal device performs demapping on the first shared channel to obtain the sixth data, and performs *N*₄-fold time-domain despreading on the sixth data to obtain the seventh data. In another example, a baseband chip (or a baseband part) or a processor of the terminal device performs demapping on the first shared channel to obtain the sixth data, and performs *N*₄-fold time-domain despreading on the sixth data to obtain the seventh data.

For specific implementations of demapping and despreading, refer to the related descriptions in the conventional technology or steps S1405 and S1406 in the method 1400. Details are not described herein again.

Based on the foregoing solution, the first communication device determines, based on the quantity of the first time-domain resources and/or the quantity of the second time-domain resources, whether to multiplex the first control information on the first shared channel on the first time-domain resource. This can avoid despreading errors caused by multiplexing the first control information on the first shared channel that is inappropriate, and therefore can avoid reduction of transmission performance.

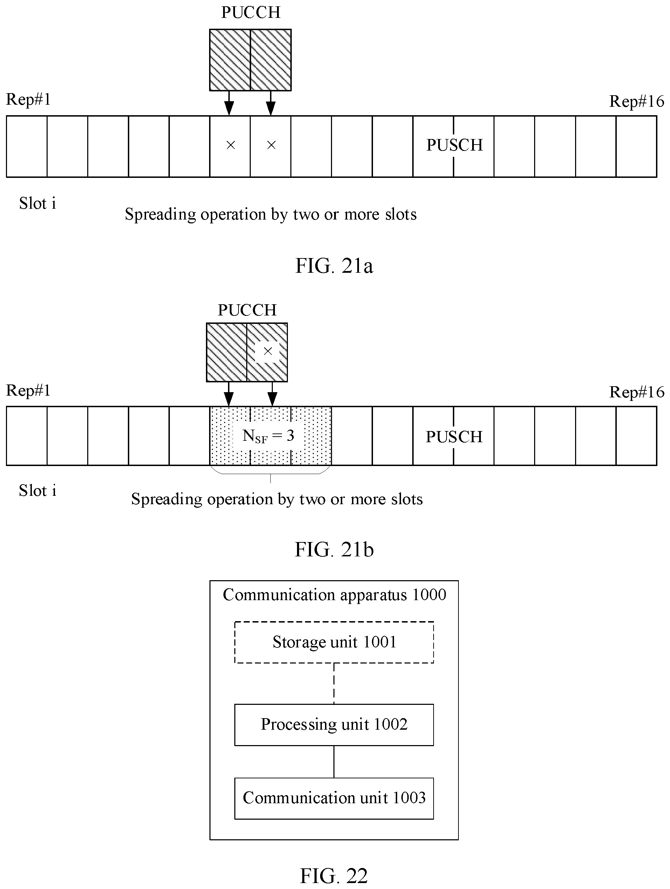

FIG. 21a and FIG. 21b are diagrams of a UCI mapping method when multiple PUCCHs and multiple spread PUSCHs overlap in time domain. As shown in FIG. 21a, on overlapping slots, when a quantity of repetition slots of the PUCCH is greater than or equal to a quantity of OCC slots of the PUSCH, which means that the overlapping slots are complete PUSCH spreading slots, UE may drop the PUSCH. As shown in FIG. 21b, on overlapping slots, when a quantity of repetition slots of the PUCCH is less than a quantity of OCC slots of the PUSCH, which means that the overlapping slots are some PUSCH spreading slots, UE may multiplex UCI on the PUCCH onto the first overlapping PUSCH slot, and correspondingly perform spreading on all slots of an OCC length; or UE may drop a PUCCH after the first PUCCH, and multiplex only UCI on the first PUCCH; or UE may drop the PUCCH. This implementation avoids despreading errors caused by multiplexing the UCI onto the inappropriate PUSCH, and allows for spreading-based PUSCH transmission in more scenarios, to improve uplink capacity in corresponding scenarios.

The foregoing describes in detail the embodiments of the communication method in this application with reference to FIG. 1 to FIG. 21b. The following describes in detail embodiments of a communication apparatus in this application with reference to FIG. 22 to FIG. 23b. It should be understood that descriptions of the apparatus embodiments correspond to the descriptions of the method embodiments. Therefore, for parts that are not described in detail, refer to the foregoing method embodiments.

FIG. 22 is a possible example block diagram of a communication apparatus in an embodiment of this application. As shown in FIG. 22, the communication apparatus 1000 may include corresponding modules or units configured to implement the foregoing method embodiments. In a possible design, the communication apparatus 1000 includes a communication unit 1003 and a processing unit 1002. Optionally, the communication apparatus 1000 may further include a storage unit 1001 configured to store program code and/or data of the apparatus. The communication unit 1003 may also be referred to as a communication interface, a transceiver unit, or an interface unit. The communication apparatus 1000 may be a terminal-side apparatus in the foregoing embodiments, for example, a terminal or a communication module in a terminal, or a circuit or chip responsible for a communication function in a terminal.

In a possible design, when the communication apparatus 1000 is a terminal or a communication module in a terminal, functions of the processing unit 1002 may be implemented by one or more processors. Specifically, the processor may include a modem chip, or a system on chip SoC chip including a modem core, or an SIP chip. Functions of the communication unit 1003 may be implemented by a transceiver circuit.

In a possible design, when the communication apparatus 1000 is a circuit or chip responsible for a communication function in a terminal, for example, a modem chip, a system on chip SoC chip including a modem core, or an SIP chip, functions of the processing unit 1002 may be implemented by a circuit system that is in the chip and that includes one or more processors or processor cores. Functions of the communication unit 1003 may be implemented by an interface circuit or a data transceiver circuit in the foregoing chip.

For example, the processing unit 1002 is configured to multiplex first control information and first data to obtain second data; the processing unit 1002 is further configured to perform time-domain spreading and/or frequency-domain spreading on the second data by using a first sequence to obtain third data that occupies a first resource; and the communication unit 1003 is configured to transmit the third data on the first resource via a first shared channel.

In a possible design, the processing unit 1002 is further configured to arrange the first control information and the first data in a predefined manner on a time-domain resource carrying the first data, where the first resource includes the time-domain resource carrying the first data.

In a possible design, the processing unit 1002 is further configured to multiply the second data by *N*₁ elements in the first sequence sequentially to obtain the third data, where the second data is on a second resource, the second resource includes M sub-resources, the second resource is included in the first resource, the third data occupies Mx*N*₁ sub-resources, the first resource includes the Mx*N*₁ sub-resources, M is a positive integer, and *N*₁ is a positive integer.

In a possible design, the processing unit 1002 is further configured to multiplex the first control information and the first data when a first control channel and the first shared channel overlap on the first resource, to obtain the second data, where the first control channel is used for carrying the first control information; and/or the processing unit 1002 is further configured to multiplex the first control information and the first data when the second data is on the second resource and a value of the M sub-resources included in the second resource is greater than a first threshold, to obtain the second data, where the first control channel is used for carrying the first control information.

In a possible design, a modulation scheme for the first control information is the same as a modulation scheme for the first data.

In a possible design, the first resource is a data symbol in a slot, and the data symbol includes no demodulation reference signal.

In a possible design, the first control information includes any one of the following: uplink control information, downlink control information, or sidelink control information; and the first shared channel includes any one of the following: a physical uplink shared channel, a physical downlink shared channel, or a physical sidelink shared channel.

In a possible design, a DFT-s-OFDM waveform is used for the second data and/or the third data. In a possible design, the processing unit 1002 is further configured to determine to transmit the first shared channel on a first time-domain resource, where the first time-domain resource is included in the first resource; the processing unit 1002 is further configured to obtain first information, where the first information indicates to transmit a first control channel on a second time-domain resource, the second time-domain resource is included in the first time-domain resource, and the first control channel is used for carrying first control information; and the processing unit 1002 is further configured to determine, based on a time-domain position of the second time-domain resource, whether to multiplex the first control information on the first shared channel on the first time-domain resource.

In a possible design, the processing unit 1002 is further configured to multiplex the first control information and the first data when a first condition is satisfied, to obtain the second data, where the first condition includes one or more of the following: an interval between the second time-domain resource and a third time-domain resource is greater than or equal to a first threshold, where the third time-domain resource is used for receiving the first information, or the third time-domain resource is a time-domain resource for triggering transmission of the first control information; and a time-domain resource in which the second time-domain resource and the first time-domain resource overlap is a time-domain resource that is the first one in the first time-domain resource.

In a possible design, the processing unit 1002 is further configured to determine to transmit the first shared channel on a first time-domain resource, where the first time-domain resource is included in the first resource; the processing unit 1002 is further configured to obtain first information, where the first information indicates to transmit a first control channel on a second time-domain resource, the second time-domain resource is included in the first time-domain resource, and the first control channel is used for carrying first control information; and the processing unit 1002 is further configured to determine, based on a quantity of the first time-domain resources and/or a quantity of the second time-domain resources, whether to multiplex the first control information on the first shared channel on the first time-domain resource.

In a possible design, the processing unit 1002 is further configured to multiplex the first control information and the first data when a second condition is satisfied, to obtain the second data, where the second condition includes: the quantity of the second time-domain resources is less than or equal to the quantity of the first time-domain resources.

The communication apparatus 1000 may be a network-side apparatus in the foregoing embodiments, for example, an access network device, or a module (such as a circuit, a chip, or a chip system) in an access network device, or a logical node or a logical module that can implement all or some functions of an access network device.

In a possible design, when the communication apparatus 1000 is a network device or a communication module in a network device, functions of the processing unit 1002 may be implemented by one or more processors. Specifically, the processor may include a chip. Functions of the communication unit 1003 may be implemented by a transceiver circuit.

In a possible design, when the communication apparatus 1000 is a circuit or chip responsible for a communication function in a network device, functions of the processing unit 1002 may be implemented by a circuit system that is in the chip and that includes one or more processors or processor cores. Functions of the communication unit 1003 may be implemented by an interface circuit or a data transceiver circuit in the foregoing chip.

For example, the communication unit 1003 is configured to receive third data on a first resource via a first shared channel. For example, the processing unit 1002 is configured to perform time-domain despreading and/or frequency-domain despreading on the third data by using a first sequence, to obtain second data. For example, the processing unit 1002 is configured to demultiplex the second data to obtain first control information and first data.

In a possible design, the third data is multiplied by conjugates of *N*₁ elements in the first sequence sequentially, to obtain *N*₁ pieces of the second data, where each piece of the second data is on a second resource, the second resource includes M sub-resources, the second resource is included in the first resource, the third data includes Mx*N*₁ symbols, and both M and *N*₁ are positive integers. In a possible design, the third data is received via the first shared channel when a first control channel and the first shared channel overlap on the first resource, where the first control channel is used for carrying the first control information.

In a possible design, a modulation scheme for the first control information is the same as a modulation scheme for the first data.

In a possible design, the second resource is a data symbol in the first resource, and the data symbol includes no demodulation reference signal.

In a possible design, the first control information includes any one of the following: uplink control information, downlink control information, or sidelink control information; and the first shared channel includes any one of the following: a physical uplink shared channel, a physical downlink shared channel, or a physical sidelink shared channel.

In a possible design, a DFT-s-OFDM waveform is used for the second data and/or the third data. It may be understood that unit division in the foregoing apparatus is merely logical function division. One function may correspond to one functional unit, or two or more functions may be integrated into one functional unit. During actual implementation, all or some units may be integrated into one physical entity, or may be distributed on different physical entities. In addition, the functional unit may be implemented in a form of hardware, or may be implemented in a form of software, or may be implemented by a combination of hardware and software. Whether a function is performed by hardware or software depends on particular applications and design constraints of the technical solutions. A person skilled in the art may use different methods to implement the described functions for the particular applications, but it should not be considered that the implementation goes beyond the scope of this application.

In an example, the functional unit in any one of the foregoing apparatuses may be one or more integrated circuits configured to implement the foregoing method, for example, one or more application-specific integrated circuits (application-specific integrated circuit, ASIC), or one or more central processing units (central processing unit, CPU), one or more microprocessors (microprocessor unit, MPU), one or more microcontrollers (microcontroller unit, MCU), one or more digital signal processors (digital signal processor, DSP), or one or more programmable logic gate arrays (field programmable gate array, FPGA), or a combination of at least two of these integrated circuit forms.

In an example, the storage unit 1001 may include a random access memory, a flash memory, a read-only memory, a programmable read-only memory, an electrically erasable programmable memory, and/or a register.

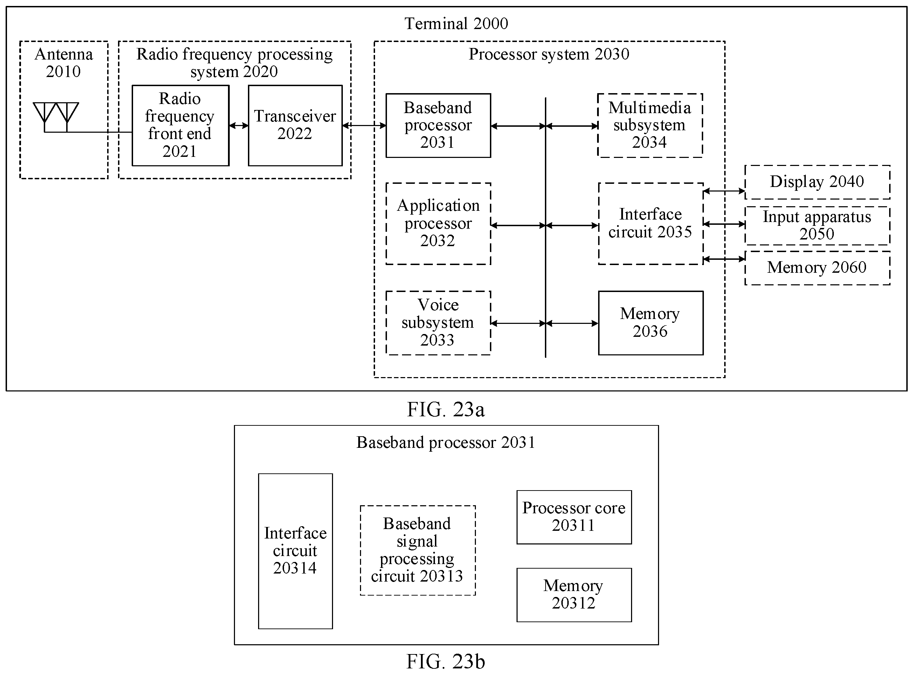

FIG. 23a and FIG. 23b are diagrams of a structure of a terminal 2000 according to an embodiment of this application. The terminal 2000 may correspond to the terminal shown in FIG. 1, and is configured to implement operations of the terminal in the foregoing embodiments. As shown in FIG. 23a, the terminal 2000 includes one or more antennas 2010, a radio frequency processing system 2020, and a processor system 2030.

In a downlink or sidelink direction, the radio frequency processing system 2020 receives a radio frequency signal by using the antenna 2010, and transmits a signal obtained after radio frequency processing to the processor system 2030 for further processing. In an uplink or sidelink direction, the processor system 2030 performs signal processing on information on the terminal side, and then transmits the signal to the radio frequency processing system 2020, and the radio frequency processing system 2020 performs radio frequency processing on the signal, and then transmits the signal by using the antenna 2010.

In an example, the radio frequency processing system 2020 is used as a communication interface for the terminal to communicate with the outside, and may include a radio frequency front end 2021 (RF front end, RFFE) and a radio frequency transceiver 2022 (RF transceiver). The RFFE 2021 is mainly configured to perform one or more of processing, such as shaping, passband selection, or gain, on an RF signal received by the antenna or an RF signal to be transmitted by using the antenna, and may include one or more of components such as a radio frequency switch, a duplexer, a filter, a power amplifier, antenna tuning, and a low noise amplifier. The RFFE 2021 may be a circuit system formed by multiple discrete components, or may be integrated and packaged in one or more chips. The radio frequency transceiver 2022 is configured to process an RF signal received by the RFFE into a baseband/intermediate-frequency signal for the processor system 2030 to perform next processing, and process a baseband/intermediate-frequency signal provided by the processor system 2030 into an RF signal to transmit the RF signal to the RFFE 2021. The baseband/intermediate-frequency signal transmitted between the radio frequency transceiver 2022 and the processor system 2030 may be a digital signal or an analog signal. The radio frequency transceiver 2022 may be implemented by one or more chips, and the chip is typically referred to as a radio frequency chip (radio frequency integrated circuit (radio frequency integrated circuit, RFIC)).

In an example, the processor system 2030 may include one or more processors configured to process signals and execute one or more communication protocols. Optionally, the processor system 2030 may further include a memory 2036. In an example, the one or more processors include at least one baseband processor 2031 (also referred to as a modem (modem) processor). The memory 2036 is configured to store data and/or computer program instructions. Optionally, the processor system 2030 may further include one or more application processors 2032 configured to implement processing on an operating system and an application layer of the terminal. Optionally, the processor system 2030 may further include one or more of a voice subsystem 2033, a multimedia subsystem 2034, or an interface circuit 2035. The voice subsystem 2033 is configured to process speech signals, the multimedia subsystem 2034 is configured to process multimedia-related operations, such as video coding and image processing, and the interface circuit 2035 is configured to implement communication with other terminal components, such as a display 2040, an input apparatus 2050, and a memory 2060. The foregoing components in the processor system 2030 may communicate with each other by using a bus or a communication interface circuit.

In an example, the processor system 2030 may be packaged into a processor chip, for example, an SoC chip or an SIP chip. In an example, the processor system 2030 may be a system formed by multiple chips. For example, the baseband processor 2031 therein may be independently packaged into a chip, or may be packaged into a chip with some or all circuits of the radio frequency processing system.

In an example, the memory 2036 may be an on-chip memory, that is, on the processor system 2030 chip. In an example, the memory 2060 may be an off-chip memory, that is, outside the processor system 2030 chip.

In an example, as shown in FIG. 23b, the baseband processor 2031 in the terminal 2000 provided in this embodiment of this application may include one or more processor cores 20311 and an interface circuit 20314. The one or more processor cores 20311 are configured to process signals and execute one or more communication protocols. Optionally, the baseband processor 2031 may further include a memory 20312, and the memory 20312 is configured to store at least some corresponding computer program instructions and/or data. In an example, the one or more processor cores 20311 execute the computer program instructions stored in the memory 20312, to implement related operations in the foregoing method embodiments. In this application, that the memory 20312 is configured to store corresponding computer program instructions and/or data may mean that the memory 20312 is configured to store all corresponding computer program instructions and/or data for execution by the processor core 20311; or may mean that the memory 20312 is configured to store some corresponding computer program instructions and/or data. The some corresponding computer program instructions and/or data include computer program instructions and/or data that currently need to be executed by the processor core 20311. The memory 20312 may store different parts of computer program instructions and/or data multiple times for the processor core 20311 to perform related operations in the foregoing method embodiments. The interface circuit 20314 is used as a communication interface for implementing communication with other components, for example, transmitting signals with the radio frequency processing system 2020, and implementing communication with other subsystems and related components of the processor system 2030 through a bus, for example, transmitting data control signals with the application processor 2032, and transmitting data or computer program instructions with the memory 2036 or the memory 2060. Optionally, to reduce loads of the processor core, a baseband signal processing circuit 20313 may be further disposed to implement processing of at least some baseband signals, including one or more of signal demodulation, modulation, encoding, or decoding.

In an example, the communication apparatus provided in this application may be the terminal 2000, a communication module including the processor system 2030 and the radio frequency processing system 2020, the processor system 2030, or the baseband processor 2031.

The processor, the processor system, the application processor, the baseband processor, the processor circuit, or the processor core may be collectively referred to as a processor. The processor may include one or a combination of a CPU, a DSP, an MPU, an MCU, a graphics processing unit (graphics processing unit, GPU), an FPGA, an ASIC, an artificial intelligence (artificial intelligence, AI) processor, or a neural-network processing unit (neural-network processing unit, NPU).

The memory may include one or more of the following storage media: a random access memory (random access memory, RAM), a static random access memory (static RAM, SRAM), a dynamic random access memory (dynamic RAM, DRAM), a phase-change memory (phase-change memory, PCM), a resistive random access memory (resistive RAM, ReRAM), a magnetoresistive random access memory (magnetoresistive RAM, MRAM), a ferroelectric random access memory (ferroelectric RAM, FRAM), a cache, a register, a read-only memory (read-only memory, ROM), a flash memory, an erasable programmable read-only memory (erasable programmable ROM, EPROM), and a hard disk. In an example, computer program instructions for performing the foregoing embodiments may be stored in a non-volatile memory, for example, at least a part (which may be, for example, one or more of a ROM, a flash memory, an EPROM, or a hard disk) of the memory 2060. When the terminal runs, some or all of corresponding computer program instructions may be loaded to a memory that has a higher transmission speed than the processor, for example, at least a part (which may be, for example, one or more of a RAM, an SRAM, a DRAM, a PCM, a RERAM, an MRAM, a FRAM, a cache, or a register) of the memory 2036 and/or the memory 20312, for the processor to implement the steps in the foregoing method embodiments.

In an example, the radio frequency transceiver 2022 and the radio frequency front end 2021 may also be packaged in a chip. In an example, the radio frequency transceiver 2022, the radio frequency front end 2021, and the baseband processor 2031 may also be packaged in a chip.

An embodiment of this application further provides a computer-readable storage medium, storing computer instructions for implementing the method performed by the communication apparatus (for example, a terminal or a network device) in the foregoing method embodiments.

An embodiment of this application further provides a computer program product, including instructions. When the instructions are executed by a computer, the method performed by the communication apparatus (for example, a terminal or a network device) in the foregoing method embodiments is implemented.

An embodiment of this application further provides a communication system. The communication system includes one or more of the terminal and the network device in the foregoing embodiments. For explanations and beneficial effects of related content in any one of the apparatuses provided above, refer to the corresponding method embodiment provided above. Details are not described herein again.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk storage and an optical memory) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or another programmable data processing device, so that a series of operations and steps are performed on the computer or another programmable device, to generate computer-implemented processing. Therefore, the instructions executed on the computer or another programmable device provide steps for implementing a specific function in one or more processes in the flowcharts and/or in one or more blocks in the block diagrams.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
multiplexing first control information and first data to obtain second data;
performing time-domain spreading and/or frequency-domain spreading on the second data by using a first sequence, to obtain third data that occupies a first resource; and
transmitting the third data on the first resource via a first shared channel.

2. The method according to claim 1, wherein multiplexing the first control information and the first data to obtain the second data comprises:
arranging the first control information and the first data in a predefined manner on a time-domain resource carrying the first data, wherein the first resource comprises the time-domain resource carrying the first data.

3. The method according to claim 1 or 2, wherein performing time-domain spreading and/or frequency-domain spreading on the second data by using the first sequence, to obtain the third data that occupies the first resource comprises:
multiplying the second data by *N*₁ elements in the first sequence sequentially to obtain the third data, wherein
the second data is on a second resource, the second resource comprises M sub-resources, the second resource is comprised in the first resource, the third data occupies Mx*N*₁ sub-resources, the first resource comprises the Mx*N*₁ sub-resources, M is a positive integer, and *N*₁ is a positive integer.

4. The method according to any one of claims 1 to 3, wherein multiplexing the first control information and the first data to obtain the second data comprises:
multiplexing the first control information and the first data when a first control channel and the first shared channel overlap on the first resource, to obtain the second data, wherein the first control channel is used for carrying the first control information; and/or
multiplexing the first control information and the first data when the second data is on the second resource and a value of the M sub-resources comprised in the second resource is greater than a first threshold, to obtain the second data, wherein the first control channel is used for carrying the first control information.

5. The method according to any one of claims 1 to 4, wherein a modulation scheme for the first control information is the same as a modulation scheme for the first data.

6. The method according to any one of claims 3 to 5, wherein the first resource is a data symbol in a slot, and the data symbol comprises no demodulation reference signal.

7. The method according to any one of claims 1 to 6, wherein
the first control information comprises any one of the following: uplink control information, downlink control information, or sidelink control information; and
the first shared channel comprises any one of the following: a physical uplink shared channel, a physical downlink shared channel, or a physical sidelink shared channel.

8. The method according to any one of claims 1 to 7, wherein a DFT-s-OFDM waveform is used for the second data and/or the third data.

9. The method according to any one of claims 1 to 8, wherein before multiplexing the first control information and the first data to obtain the second data, the method further comprises:
determining to transmit the first shared channel on a first time-domain resource, wherein the first time-domain resource is comprised in the first resource;
obtaining first information, wherein the first information indicates to transmit the first control channel on a second time-domain resource, the second time-domain resource is comprised in the first time-domain resource, and the first control channel is used for carrying the first control information; and
determining, based on a time-domain position of the second time-domain resource, whether to multiplex the first control information on the first shared channel on the first time-domain resource.

10. The method according to claim 9, wherein multiplexing the first control information and the first data to obtain the second data comprises:
multiplexing the first control information and the first data when a first condition is satisfied, to obtain the second data, wherein
the first condition comprises one or more of the following:
an interval between the second time-domain resource and a third time-domain resource is greater than or equal to a first threshold, wherein the third time-domain resource is used for receiving the first information, or the third time-domain resource is a time-domain resource for triggering transmission of the first control information; and
a time-domain resource in which the second time-domain resource and the first time-domain resource overlap is a time-domain resource that is the first one in the first time-domain resource.

11. The method according to any one of claims 1 to 8, wherein before multiplexing the first control information and the first data to obtain the second data, the method further comprises:
determining to transmit the first shared channel on a first time-domain resource, wherein the first time-domain resource is comprised in the first resource;
obtaining first information, wherein the first information indicates to transmit the first control channel on a second time-domain resource, the second time-domain resource is comprised in the first time-domain resource, and the first control channel is used for carrying the first control information; and
determining, based on a quantity of first time-domain resources and/or a quantity of second time-domain resources, whether to multiplex the first control information on the first shared channel on the first time-domain resource.

12. The method according to claim 11, wherein multiplexing the first control information and the first data to obtain the second data comprises:
multiplexing the first control information and the first data when a second condition is satisfied, to obtain the second data, wherein
the second condition comprises:
the quantity of the second time-domain resources is less than or equal to the quantity of the first time-domain resources.

13. A communication method, applied to a second communication device and comprising:
receiving third data on a first resource via a first shared channel;
performing time-domain despreading and/or frequency-domain despreading on the third data by using a first sequence, to obtain second data; and
demultiplexing the second data to obtain first control information and first data.

14. The method according to claim 13, wherein performing time-domain despreading and/or frequency-domain despreading on the third data by using the first sequence, to obtain the second data comprises:
multiplying the third data by conjugates of *N*₁ elements in the first sequence sequentially, to obtain *N*₁ pieces of the second data, wherein each piece of the second data is on a second resource, the second resource comprises M sub-resources, the second resource is comprised in the first resource, the third data comprises Mx*N*₁ symbols, and both M and *N*₁ are positive integers.

15. The method according to claim 13 or 14, wherein receiving the third data via the first shared channel comprises:
receiving the third data via the first shared channel when a first control channel and the first shared channel overlap on the first resource, wherein the first control channel is used for carrying the first control information.

16. The method according to any one of claims 13 to 15, wherein a modulation scheme for the first control information is the same as a modulation scheme for the first data.

17. The method according to any one of claims 14 to 16, wherein the second resource is a data symbol in the first resource, and the data symbol comprises no demodulation reference signal.

18. The method according to any one of claims 13 to 17, wherein
the first control information comprises any one of the following: uplink control information, downlink control information, or sidelink control information; and
the first shared channel comprises any one of the following: a physical uplink shared channel, a physical downlink shared channel, or a physical sidelink shared channel.

19. The method according to any one of claims 13 to 18, wherein a DFT-s-OFDM waveform is used for the second data and/or the third data.

20. A communication method, comprising:
multiplexing, by a first communication device, first control information and first data to obtain second data;
performing, by the first communication device, time-domain spreading and/or frequency-domain spreading on the second data by using a first sequence, to obtain third data that occupies a first resource;
transmitting, by the first communication device, the third data to a second communication device on the first resource via a first shared channel, and receiving, by the second communication device, the third data from the first communication device on the first resource via the first shared channel;
performing, by the second communication device, time-domain despreading and/or frequency-domain despreading on the third data by using the first sequence, to obtain the second data; and
demultiplexing, by the second communication device, the second data to obtain the first control information and the first data.

21. The method according to claim 20, wherein performing, by the first communication device, time-domain spreading and/or frequency-domain spreading on the second data by using the first sequence, to obtain the third data that occupies the first resource comprises:
multiplying, by the first communication device, the second data by *N*₁ elements in the first sequence sequentially to obtain the third data, wherein the second data is on a second resource, the second resource comprises M sub-resources, the second resource is comprised in the first resource, M is a positive integer, the third data occupies Mx*N*₁ sub-resources, the first resource comprises the Mx*N*₁ sub-resources, and *N*₁ is a positive integer.

22. The method according to claim 21, wherein multiplexing, by the first communication device, the first control information and the first data to obtain the second data comprises:
multiplexing, by the first communication device, the first control information and the first data when a first control channel and the first shared channel overlap on the first resource, to obtain the second data, wherein the first control channel is used for carrying the first control information; and/or
multiplexing the first control information and the first data when the second data is on the second resource and a value of the M sub-resources comprised in the second resource is greater than a first threshold, to obtain the second data, wherein the first control channel is used for carrying the first control information.

23. The method according to any one of claims 20 to 22, wherein performing, by the second communication device, time-domain despreading and/or frequency-domain despreading on the third data by using the first sequence, to obtain the second data comprises:
multiplying, by the second communication device, the third data by conjugates of the *N*₁ elements in the first sequence sequentially, to obtain *N*₁ pieces of the second data, wherein each piece of the second data is on the second resource, the second resource comprises the M sub-resources, the second resource is comprised in the first resource, the third data comprises Mx*N*₁ symbols, and both M and *N*₁ are positive integers.

24. A communication method, applied to a first communication device and comprising:
determining to transmit a first shared channel on a first time-domain resource, wherein the first shared channel is used for carrying fourth data, the fourth data is obtained by performing *N*₂-fold time-domain spreading on fifth data, and *N*₂ is a positive integer;
obtaining first information, wherein the first information indicates to transmit a first control channel on a second time-domain resource, the second time-domain resource is comprised in the first time-domain resource, and the first control channel is used for carrying first control information; and
determining, based on a time-domain position of the second time-domain resource, whether to multiplex the first control information on the first shared channel on the first time-domain resource.

25. The method according to claim 24, wherein the method further comprises:
transmitting the first shared channel on the first time-domain resource.

26. The method according to claim 24 or 25, wherein obtaining the first information comprises:
receiving the first information on a third time-domain resource.

27. The method according to claim 26, wherein determining, based on the time-domain position of the second time-domain resource, whether to multiplex the first control information on the first shared channel on the first time-domain resource comprises:
determining, when an interval between the second time-domain resource and the third time-domain resource is greater than or equal to a first threshold, to multiplex the first control information on the first shared channel on the first time-domain resource; and/or
determining, when the interval between the second time-domain resource and the third time-domain resource is less than the first threshold, not to multiplex the first control information on the first shared channel on the first time-domain resource.

28. The method according to claim 27, wherein the first threshold is related to a processing capability of the first communication device.

29. The method according to any one of claims 24 to 28, wherein determining, based on the time-domain position of the second time-domain resource, whether to multiplex the first control information on the first shared channel on the first time-domain resource comprises:
determining, when a time-domain resource in which the second time-domain resource and the first time-domain resource overlap is a time-domain resource that is the first one in the first time-domain resource, to multiplex the first control information on the first shared channel on the first time-domain resource; or
determining, when a time-domain resource in which the second time-domain resource and the first time-domain resource overlap is a time-domain resource that is not the first one in the first time-domain resource, not to multiplex the first control information on the first shared channel on the first time-domain resource.

30. The method according to any one of claims 24 to 29, wherein the time-domain spreading comprises one or more of the following: a time-domain unit is a slot or a symbol.

31. The method according to any one of claims 24 to 30, wherein the fourth data is obtained by performing *N*₃-fold frequency-domain spreading on the fifth data, and *N*₃ is a positive integer.

32. The method according to claim 31, wherein the frequency-domain spreading comprises one or more of the following: resource element RE spreading or N-fold frequency-domain comb multiplexing, wherein N is a comb size of a frequency-domain resource occupied by the fifth data, and N is a positive integer.

33. The method according to any one of claims 24 to 32, wherein that the fourth data is obtained by performing the *N*₂-fold time-domain spreading on the fifth data comprises:
mapping the fifth data onto the third time-domain resource, wherein the third time-domain resource comprises K time-domain sub-resources, the third time-domain resource is comprised in the first time-domain resource, and K is a positive integer; and
multiplying the fifth data by *N*₂ elements in a second sequence sequentially to obtain the fourth data, wherein the fourth data occupies Kx*N*₂ sub-resources, and the first time-domain resource comprises the Kx*N*₂ sub-resources.

34. The method according to any one of claims 24 to 33, wherein a modulation scheme for the first control information is the same as a modulation scheme for first data.

35. The method according to any one of claims 24 to 34, wherein the second time-domain resource is a data symbol in the first time-domain resource, and the data symbol comprises no demodulation reference signal.

36. The method according to any one of claims 24 to 35, wherein
the first control information comprises any one of the following: uplink control information, downlink control information, or sidelink control information; and
the first shared channel comprises any one of the following: a physical uplink shared channel, a physical downlink shared channel, or a physical sidelink shared channel.

37. The method according to any one of claims 24 to 36, wherein a DFT-s-OFDM waveform is used for the fourth data.

38. A communication method, applied to a second communication device and comprising:
receiving a first shared channel on a first time-domain resource;
demultiplexing the first shared channel to obtain first control information and fourth data, wherein the fourth data is obtained by performing *N*₂-fold time-domain spreading on fifth data, and *N*₂ is a positive integer; and
performing *N*₂-fold time-domain despreading on the fourth data to obtain the fifth data.

39. The method according to claim 38, wherein receiving the first shared channel on the first time-domain resource comprises:
receiving the first shared channel on the first time-domain resource when an interval between second time-domain resource and third time-domain resource is greater than or equal to a first threshold.

40. The method according to claim 38 or 39, wherein the first threshold is related to a processing capability of a first communication device.

41. The method according to any one of claims 38 to 40, wherein receiving the first shared channel on the first time-domain resource comprises:
receiving the first shared channel on the first time-domain resource when a time-domain resource in which the second time-domain resource and the first time-domain resource overlap is a time-domain resource that is the first one in the first time-domain resource.

42. The method according to any one of claims 38 to 41, wherein the time-domain spreading comprises one or more of the following: a time-domain unit is a slot or a symbol.

43. The method according to any one of claims 38 to 42, wherein the fourth data is obtained by performing *N*₃-fold frequency-domain spreading on the fifth data, and *N*₃ is a positive integer.

44. The method according to claim 43, wherein the frequency-domain spreading comprises one or more of the following: resource element RE spreading or N-fold frequency-domain comb multiplexing, wherein N is a comb size of a frequency-domain resource occupied by the fifth data, and N is a positive integer.

45. The method according to any one of claims 38 to 44, wherein a modulation scheme for the first control information is the same as a modulation scheme for first data.

46. The method according to any one of claims 38 to 45, wherein the second time-domain resource is a data symbol in the first time-domain resource, and the data symbol comprises no demodulation reference signal.

47. The method according to any one of claims 38 to 46, wherein
the first control information comprises any one of the following: uplink control information, downlink control information, or sidelink control information; and
the first shared channel comprises any one of the following: a physical uplink shared channel, a physical downlink shared channel, or a physical sidelink shared channel.

48. The method according to any one of claims 38 to 47, wherein a DFT-s-OFDM waveform is used for the fourth data.

49. A communication method, applied to a first communication device and comprising:
determining to transmit a first shared channel on a first time-domain resource, wherein the first shared channel is used for carrying sixth data, the sixth data is obtained by performing *N*₄-fold time-domain spreading on seventh data, and *N*₄ is a positive integer;
obtaining first information, wherein the first information indicates to transmit a first control channel on a second time-domain resource, the second time-domain resource is comprised in the first time-domain resource, and the first control channel is used for carrying first control information; and
determining, based on a quantity of first time-domain resources and/or a quantity of second time-domain resources, whether to multiplex the first control information on the first shared channel on the first time-domain resource.

50. The method according to claim 49, wherein the method further comprises:
transmitting the first shared channel on the first time-domain resource.

51. The method according to claim 49 or 50, wherein the quantity of the second time-domain resources is P, the quantity of the first time-domain resources is Q, and both P and Q are positive integers; and
determining, based on the quantity of the first time-domain resources and/or the quantity of the second time-domain resources, whether to multiplex the first control information on the first shared channel on the first time-domain resource comprises:
determining, when Q is less than or equal to P, not to multiplex the first control information on the first shared channel on the Q first time-domain resources; or
determining, when Q is less than or equal to P, not to transmit the first shared channel on the Q first time-domain resources.

52. The method according to claim 49 or 50, wherein the quantity of the second time-domain resources is P, the quantity of the first time-domain resources is Q, and both P and Q are positive integers; and
determining, based on the quantity of the first time-domain resources and/or the quantity of the second time-domain resources, whether to multiplex the first control information on the first shared channel on the first time-domain resource comprises:
multiplexing the first control information on the first shared channel on a fifth time-domain resource when P is less than Q, wherein
the fifth time-domain resource is a time-domain resource that is the first one in an overlapping part between the first time-domain resource and the second time-domain resource; or
the fifth time-domain resource is a time-domain resource that is the first one in the first time-domain resource; or
the fifth time-domain resource is a time-domain resource that is the first one in the second time-domain resource.

53. The method according to claim 49 or 50, wherein the quantity of the second time-domain resources is P, the quantity of the first time-domain resources is Q, and both P and Q are positive integers; and
determining, based on the quantity of the first time-domain resources and/or the quantity of the second time-domain resources, whether to multiplex the first control information on the first shared channel on the first time-domain resource comprises:
determining, when P is less than Q, to multiplex second control information on the first shared channel on the Q first time-domain resources, wherein a second control channel is used for carrying the second control information, and the second control channel is a control channel that is the first one in the first control channel;
and/or
determining, when P is less than Q, not to transmit third control information, wherein a control channel other than the second control channel in the first control channel is used for carrying the third control information.

54. The method according to claim 49 or 50, wherein the quantity of the second time-domain resources is P, the quantity of the first time-domain resources is Q, and both P and Q are positive integers; and
determining, based on the quantity of the first time-domain resources and/or the quantity of the second time-domain resources, whether to multiplex the first control information on the first shared channel on the first time-domain resource comprises:
determining, when P is less than Q, not to multiplex the first control information on the first shared channel on the Q first time-domain resources.

55. The method according to any one of claims 49 to 54, wherein that the sixth data is obtained by performing the *N*₄-fold time-domain spreading on the seventh data comprises:
mapping the seventh data onto a fourth time-domain resource, wherein the fourth time-domain resource comprises L time-domain sub-resources, the fourth time-domain resource is comprised in the first time-domain resource, and L is a positive integer; and
multiplying the seventh data by *N*₄ elements in a third sequence sequentially to obtain the sixth data, wherein the sixth data occupies Lx*N*₄ sub-resources, and the first time-domain resource comprises the Lx*N*₄ sub-resources.

56. The method according to any one of claims 49 to 55, wherein a modulation scheme for the first control information is the same as a modulation scheme for first data.

57. The method according to any one of claims 49 to 56, wherein the second time-domain resource is a data symbol in the first time-domain resource, and the data symbol comprises no demodulation reference signal.

58. The method according to any one of claims 49 to 57, wherein
the first control information comprises any one of the following: uplink control information, downlink control information, or sidelink control information; and
the first shared channel comprises any one of the following: a physical uplink shared channel, a physical downlink shared channel, or a physical sidelink shared channel.

59. The method according to any one of claims 49 to 58, wherein a DFT-s-OFDM waveform is used for the sixth data.

60. The method according to any one of claims 49 to 59, wherein the time-domain spreading comprises one or more of the following: a time-domain unit is a slot or a symbol.

61. The method according to any one of claims 49 to 60, wherein the sixth data is obtained by performing *N*₅-fold frequency-domain spreading on the seventh data, and *N*₅ is a positive integer.

62. The method according to claim 61, wherein the frequency-domain spreading comprises one or more of the following: resource element RE spreading or S-fold frequency-domain comb multiplexing, wherein S is a comb size of a frequency-domain resource occupied by the seventh data, and S is a positive integer.

63. A communication method, applied to a first communication device and comprising:
receiving a first shared channel on a first time-domain resource;
demultiplexing the first shared channel to obtain first control information and sixth data, wherein the sixth data is obtained by performing *N*₄-fold time-domain spreading on seventh data, and *N*₄ is a positive integer; and
performing *N*₄-fold time-domain despreading on the sixth data to obtain the seventh data.

64. The method according to claim 63, wherein a quantity of second time-domain resources is P, a quantity of first time-domain resources is Q, and both P and Q are positive integers; and
receiving the first shared channel on the first time-domain resource comprises:
when P is less than Q, multiplexing the first control information on the first shared channel on a fifth time-domain resource, and receiving the first shared channel on the first time-domain resource, wherein
the fifth time-domain resource is a time-domain resource that is the first one in an overlapping part between the first time-domain resource and the second time-domain resource; or
the fifth time-domain resource is a time-domain resource that is the first one in the first time-domain resource; or
the fifth time-domain resource is a time-domain resource that is the first one in the second time-domain resource.

65. The method according to claim 63 or 64, wherein receiving the first shared channel on the first time-domain resource comprises:
receiving the first shared channel on the first time-domain resource when a time-domain resource in which the second time-domain resource and the first time-domain resource overlap is a time-domain resource that is the first one in the first time-domain resource.

66. The method according to any one of claims 63 to 65, wherein the time-domain spreading comprises one or more of the following: a time-domain unit is a slot or a symbol.

67. The method according to any one of claims 63 to 66, wherein the sixth data is obtained by performing *N*₅-fold frequency-domain spreading on the seventh data, and *N*₅ is a positive integer.

68. The method according to claim 67, wherein the frequency-domain spreading comprises one or more of the following: resource element RE spreading or S-fold frequency-domain comb multiplexing, wherein S is a comb size of a frequency-domain resource occupied by the seventh data, and S is a positive integer.

69. The method according to any one of claims 63 to 68, wherein a modulation scheme for the first control information is the same as a modulation scheme for first data.

70. The method according to any one of claims 63 to 69, wherein the second time-domain resource is a data symbol in the first time-domain resource, and the data symbol comprises no demodulation reference signal.

71. The method according to any one of claims 63 to 70, wherein
the first control information comprises any one of the following: uplink control information, downlink control information, or sidelink control information; and
the first shared channel comprises any one of the following: a physical uplink shared channel, a physical downlink shared channel, or a physical sidelink shared channel.

72. The method according to any one of claims 63 to 71, wherein a DFT-s-OFDM waveform is used for the sixth data.

73. A communication apparatus, comprising a module or unit configured to perform the method according to any one of claims 1 to 12, or 13 to 23, or 24 to 37, or 38 to 48, or 49 to 62, or 63 to 72.

74. A communication apparatus, comprising at least one processor, wherein the at least one processor is coupled to at least one memory and is configured to execute computer instructions stored in the memory, to enable the communication apparatus to perform the method according to any one of claims 1 to 12, or 13 to 23, or 24 to 37, or 38 to 48, or 49 to 62, or 63 to 72.

75. A chip or chip system, comprising at least one processing circuit, wherein the at least one processing circuit is configured to run a computer program, to enable the chip or chip system to perform the method according to any one of claims 1 to 72.

76. A communication system, comprising a first communication device and a second communication device, wherein the first communication device is configured to perform the method according to any one of claims 1 to 12, or 24 to 37, or 49 to 62, and the second communication device is configured to perform the method according to any one of claims 13 to 23, or 38 to 48, or 63 to 72.

77. A computer-readable storage medium, wherein the computer-readable storage medium stores a computer program or instructions, and when the computer program or the instructions are run on a computer, the method according to any one of claims 1 to 72 is performed.

78. A computer program product, comprising instructions, wherein when the instructions are run on a computer, the method according to any one of claims 1 to 72 is performed.
